# EUROPÄISCHE PATENTSCHRIFT

(11) **EP 1 122 954 B1**
(45) Veröffentlichungstag und Bekanntmachung des Hinweises auf die Patenterteilung: **31.08.2005**
(21) Anmeldenummer: 01100521.2
(22) Anmeldetag: 09.01.2001
(51) Int. Cl.: H04N 7/14, H04N 7/173

(54) **Verfahren und Vorrichtung zum Übertragen von Dateneinheiten eines Datenstroms**
Method and device for transmitting data units of a data stream
Procédé et dispositif pour transmettre des unités de données d'un flux de données

(30) Priorität: 31.01.2000 DE 10004829
(43) Veröffentlichungstag der Anmeldung: 08.08.2001
(73) Patentinhaber: Tellique Kommunikationstechnik GmbH, 13507 Berlin (DE)
(72) Erfinder: Seifert, Nils, 13507 Berlin (DE)
(74) Vertreter: Liesegang, Eva

(56) Entgegenhaltungen:
- EP-A- 0 749 242
- EP-A- 1 164 796
- WO-A-91/03112
- US-A- 5 612 742

## Beschreibung

Die Erfindung betrifft ein Verfahren und eine Vorrichtung zum Übertragen von Dateneinheiten eines Datenstroms, insbesondere eines Multimediadatenstroms von mindestens einer Sendeeinrichtung an mindestens eine Empfangseinrichtung.

Die Übertragung von Echtzeit-Medien - hierzu zählt insbesondere die Übertragung im Zusammenhang mit Radio und Fernsehen - ist aus der heutigen Welt der Unterhaltung und Informationsverbreitung nicht wegzudenken. Der Verbraucher hat bei der Nutzung dieser Medien derzeit jedoch immer noch Einschränkungen in Kauf zu nehmen: Die Übertragungen beginnen zu festen Zeitpunkten und können vom Verbraucher, außer beim Einsatz von Videorecordem, auch nur zu diesen festen Zeitpunkten betrachtet bzw. "abgerufen" werden.
Vor einigen Jahren fanden deshalb Feldversuche, unter anderem mit Beteiligung der Deutschen Telekom AG statt, die den Einsatz moderner Kommunikationstechnik zur Realisierung von "Video-on-demand" vorsahen. Hierbei handelt es sich um einen Mediendienst, bei dem jeder Kunde individuell auswählt, wann er sich eine bestimmte Sendung (Spielfilm, Konzertübertragung, usw.) mit Hilfe seines Fernsehers ansehen möchte. "Video-on-demand" stellt sehr hohe Anforderungen an die hierbei genutzte technische Infrastruktur. Dieses betrifft beispielsweise die Videoserver, mit deren Hilfe die abrufbaren Medieninhalte zur Verfügung gestellt werden, und die bei der Übertragung der abrufbaren Medieninhalte an ein Empfangsgerät des Kunden notwendige Kommunikationsbandbreite. "Video-on-demand" ist deshalb im Massenmarkt bisher nicht eingesetzt worden.

Eine ("zeitunabhängige") individuelle Auswählbarkeit von Medieninhalten besteht heute (neben dem Verleih von Videokassetten) vorwiegend nur im Bereich des Internets. Über Internetseiten oder andere grafische Nutzerschnittstellen gesteuert, liefern Medienserver individuelle Medieninhalte an die Nutzer bzw. Kunden.

Die bisher im Medienbereich (zum Beispiel beim Fernsehen oder Radio) genutzten Verfahren zur Übertragung von Medieninhalten bzw. Multimediadatenströmen umfassen zunächst das oben genannte, übliche Verfahren, bei dem eine Sendung zu einem festen Sendezeitpunkt "live" an alle möglichen Empfänger übertragen wird.

Hiervon ist eine Übertragung auf Abruf, beispielsweise "Video-on-demand" zu unterscheiden. Bei diesem Verfahren ist es notwendig, daß für jeden Empfänger eine seperate Übertragung des Multimediadatenstroms, beispielsweise über ATM stattfindet, wobei die Übertragung auf Abruf, d.h. zu einem individuell bestimmbaren Zeitpunkt begonnen werden kann. Die Übertragung auf Abruf hat jedoch den Nachteil, daß potentiell für jeden Empfänger eine eigene Übertragung ausgeführt werden muß. Hierdurch steigt die notwendige Gesamtübertragungsbandbreite des Senders proportional zur Anzahl der gleichzeitig zu bedienenden Empfänger, so daß dieses Verfahren nicht oder nur mit hohen Aufwand für eine große Anzahl von Empfängern genutzt werden kann.

Aus der Druckschrift EP-A-0 749 242 ist ein Verfahren bekannt, bei dem ebenfalls eine (mehrfache, überlappende) periodische Übertragung eines Programms (z.B. eines Videodatenstroms) vorgesehen ist. In Ergänzung zu dieser periodischen Übertragung wird der Beginn der Programms einem an der Betrachtung eines Programms interessierten Nutzer individuell bereitgestellt, so dass der Nutzer das Programm zu einem beliebigen Zeitpunkt t0 betrachten kann. Hierzu wird der seit dem Beginn der letzten Sendeperiode verstrichene Teil des Programms direkt an der Nutzer zur sofortigen Wiedergabe gesendet. Parallel empfängt dieser ebenfalls das aktuell in der letzten Sendeperiode übertragene Programm und speichert es zur anschließenden Wiedergabe zwischen. Im Ergebnis kann der Nutzer das Programm zeitversetzt von der eigentlichen Übertragungsperiode betrachten.

Die Druckschrift EP 1 164 796 sieht ein Verfahren vor, bei dem ebenfalls eine periodische Übertragung eines Programms (z.B. eines Videodatenstroms) erfolgt. Weiterhin wird der Beginn vieler Programme vorab zu den potentiellen Betrachtern (Nutzern) übertragen und dort dauerhaft gespeichert. Möchte nun ein Nutzer ein Programm betrachten, wird der Videodatenstrom der zuletzt begonnenen Periode empfangen und zur späteren Wiedergabe kurzzeitig zwischengespeichert. Der (verpasste) Beginn des Videodatenstroms steht aufgrund der Vorabübertragung bereits im dauerhaften Speicher zur Verfügung und wird von dort aus sofort wiedergegeben.

Aus der Druckschrift US-A-5 612 742 ist ein Verfahren bekannt, das ebenfalls eine (mehrfache, überlappende) periodische Übertragung eines Programms vorsieht. Dazu wird das Programm (z.B. ein Videodatenstrom) in n Segmente und jedes dieser Segmente wiederum in m Elemente zerlegt. Die Elemente der einzelnen Segmente werden dann verschränkt ("interleaved") übertragen, so dass das jeweils i-te Element aller n Segmente quasi gleichzeitig gesendet weiden (z.B. die Übermittlung mit der n-fachen Datenrate des Programms unmittelbar nacheinander erfolgt) und die Segmente jeweils in aufsteigender Reihenfolge übertragen werden. Der Empfänger kann bei Empfang und Nutzung der geeigneten Elemente mit der Betrachtung des Programms nach von n und m abhängiger Verzögerung beginnen. Auch ein Vor- und Zurückspulen mit von n und m abhängiger Granularität wird möglich.

Bei einer Übertragung nahezu auf Abruf, die auch als "Near video-on-demand" bezeichnet wird, werden mehrere Empfänger zu einer Gruppe zusammengefaßt. Für diese Empfänger findet dann eine einzige gemeinsame Übertragung des Multimediadatenstroms statt. Bei diesem Verfahren werden Empfängergruppen, die den Multimediadatenstrom innerhalb eines vorgegebenen Zeitraums abrufen möchten, zusammengefaßt, und die Übertragung des Multimediadatenstroms beginnt für alle Empfänger gemeinsam nach Ablauf des vorgegebenen Zeitraums. Die Übertragung an Empfängergruppen hat jedoch den Nachteil, daß potentiell zumindestens einige Empfänger auf den Übertragungsbeginn sehr lange warten müssen (bei wenigen Übertragungen an eine große Anzahl von Empfängern) oder die Gesamtübertragungsbandbreite des Senders sehr groß ist, wenn viele Übertragungen an kleine Empfängergruppen vorgesehen sind.

Aus der Druckschrift WO 91/031112 A ist ein Verfahren und ein System zur Optimierung der Übertragung eines Programms an mehrere Nutzer über ein Verteilsystem bekannt, insbesondere in Verbindung mit Video-on-Demand. Bei dem bekannten Verfahren werden Segmente eines Videodatenstroms nach einem Sendeschema übermittelt, welches es den Nutzern ermöglicht, zu verschiedenen Zeitpunkten die Wiedergabe des gewünschten Videodatenstroms zu beginnen. Der Abstand der Zeitpunkte, zu denen die Wiedergabe des Videodatenstroms begonnen werden kann, hängt hierbei von der Granularität der Segmente ab, in welche der Videodatenstrom zum Übertragen zerlegt wird.

Bekannt ist weiterhin ein periodisches Übertragungsverfahren. Bei einer großen Anzahl von Empfängern müßten die Übertragungsanforderungen einzeln bearbeitet werden. Um dieses zu vermeiden, kann es sinnvoll sein, den Multimediadatenstrom bzw. den Medieninhalt von vornherein periodisch zu übertragen. Ein Empfänger muß dann auf den Beginn der nächsten Übertragung des Multimediadatenstroms warten. Um für die Empfänger den Beginn eines Abrufs zu vorgegebenen Zeitpunkten zu ermöglichen, muß beginnend ab den möglichen Abrufzeitpunkten jeweils der komplette Multimediadatenstrom auf mehreren Kanälen ausgestrahlt werden. Die periodische Übertragung hat deshalb den Nachteil, daß die Gesamtübertragungsbandbreite des Senders sehr groß sein muß, insbesondere wenn eine ausreichende Anzahl von Anfangsabrufzeitpunkten zur Verfügung gestellt werden soll. Andernfalls müssen die Empfänger auf den Übertragungsbeginn sehr lange warten.

Ein weiteres bekanntes Verfahren sieht vor, daß der Multimediadatenstrom von dem Empfangsgerät des Verbrauchers zu einem Zeitpunkt empfangen und gespeichert wird, zu dem eine Wiedergabe nicht vorgesehen ist. Der automatisch gespeicherte Multimediadatenstrom kann später zu einem beliebigen Zeitpunkt wiedergegeben werden. Die Speicherung kann hierbei selektiv für einzelne Multimediadatenströme vorgenommen werden oder permanent erfolgen. Das Verfahren der Wiedergabe einer gespeicherten Übertragung hat jedoch den Nachteil, daß der Empfänger den Empfang vorher auswählen muß und über eine ausreichende Speicherkapazität verfügen muß.

Aufgabe der vorliegenden Erfindung ist es, ein verbessertes Verfahren der eingangs genannten Art zu schaffen, bei dem die beschriebenen Nachteile wenigstens teilweise überwunden sind.

Die Aufgabe wird durch ein Verfahren gemäß Anspruch 1 und eine Vorrichtung gemäß Anspruch 14 gelöst.

Der wesentliche Vorteil, welcher mit der Erfindung gegenüber dem Stand der Technik erreicht ist, besteht darin, daß ein Verfahren geschaffen ist, mittels dessen ein Datenstrom, insbesondere ein Multimediadatenstrom, beliebiger Länge so übertragen wird, daß es einer beliebigen Anzahl von Verbrauchern ermöglicht ist, den Datenstrom mit Hilfe jeweiliger Empfänger zu verschiedenen Zeitpunkten unabhängig voneinander zu empfangen und zu konsumieren.

Des weiteren besteht ein wesentlicher Aspekt des erfindungsgemäßen Verfahrens darin, daß die Gesamtmenge der zwischen der Sendeeinrichtung und den Empfangseinrichtungen zu übertragenden Daten nicht proportional mit der Anzahl der Empfangseinrichtungen steigt. Hierdurch werden Übertragungskapazitäten eingespart, so daß die Kosten gesenkt werden, und "Video-on-demand" auch für den Massenmarkt nutzbar wird.

Ein gemäß des Verfahrens übertragener Datenstrom kann hierbei als Teil eines "übergeordneten" Gesamtdatenstroms ausgebildet sein.

Anwendungsgebiete des Verfahrens umfassen alle Anwendungen, bei denen beliebige Audio-/Video- oder andere Datenströme (Fernsehen, Radio, Media-on-demand, und Business TV, aber auch Streamingdata wie Börsenticker u.s.w.) an Gruppen von Verbrauchern mit jeweiligen Empfangseinrichtungen über Satelliten, Kabelnetze oder dergleichen verteilt werden, und die Verbraucher die Möglichkeit haben sollen, zwischen Datenströmen wählen zu können.

Weiterhin bestehen im Zusammenhang mit dem neuen Verfahren zur Übertragung von Dateneinheiten die folgenden Vorteile:
- Der Einstieg in eine Übertragung eines Multimediadatenstroms ist zu einem (nahezu beliebigen) Zeitpunkt möglich, wobei die Granularität der Einstiegspunkte von einer Reihe von Parametern abhängig ist, die pro Mediendatenstrom, pro Kundengruppe usw. eingestellt werden können.
- Das Betrachten bzw. Konsumieren des beim Verbraucher ausgegebenen Multimediadatenstroms kann für einen beliebigen Zeitraum unterbrochen werden.
- Ein "Schnellvorlauf" und ein "Überspringen von Teilen" nach einer Unterbrechung sind möglich.
- Für die Verbraucher können verschiedene Varianten desselben Programms (etwa ein Spielfilm in zwei Ausführungen: ein "Happy End" und ein tragisches Ende) zur Verfiigung gestellt werden.
- Es ist eine Übertragung mit unterschiedlich viel Werbung, mit kundenspezifischer Werbung usw. möglich.

Eine zweckmäßige Weiterbildung der Erfindung sieht vor, daß eine Eingabe eines Nutzers der mindestens einen Empfangseinrichtung Eⱼ zur Festlegung des Zeitpunkts t₁ und/oder des Zeitpunkts tₖ (2 ≤ k ≤ n) elektronisch erfaßt wird, wobei die Eingabe über einen zwischen der mindestens einen Sendeeinrichtung und der mindestens einen Empfangseinrichtung Eₘ ausgebildeten Rück-Datenkanal an die mindestens eine Sendeeinrichtung übertragen wird. Hierdurch kann der Beginn der Übertragung der Datenmengen von den Nutzern der Empfangseinrichtung individuell festgelegt werden.

Eine vorteilhafte Ausgestaltung der Erfindung sieht vor, daß zwischen den Zeitpunkten tₖ₋₁ und tₖ (2 ≤ k ≤ n) jeweils ein im wesentlichen gleicher zeitlicher Abstand ausgebildet ist, welcher sendeseitig vorgegeben wird, wodurch bei genügend kurzen zeitlichen Abständen fortlaufend mit der Wiedergabe der übertragenen Dateneinheiten durch die Nutzer der Empfangseinrichtungen begonnen werden kann.

Weitere Fortbildungen der Erfindung sind in den weiteren Unteransprüchen offenbart.

Die Erfindung wird im Folgenden anhand von Ausführungsbeispielen unter Bezugnahme auf eine Zeichnung näher erläutert. Hierbei zeigen:
- Figur 1: eine schematische Darstellung des zeitlichen Verlaufs einer Übetragung eines Datenstroms für eine Empfangseinrichtung;
- Figur 2: eine schematische Darstellung des zeitlichen Verlaufs einer Übetragung des Datenstroms für zwei Empfangseinrichtungen;
- Figur 3: eine schematische Darstellung des zeitlichen Verlaufs einer Übetragung des Datenstroms für eine bzw. zwei Empfangseinrichtungen, die jeweils über eine begrenzte Speicherkapazität verfügen;
- Figur 4: eine schematische Darstellung eines ersten Sendeplans für eine Sendeeinrichtung zur Übertragung des Datenstroms;
- Figur 5: eine schematische Darstellung eines zweiten Sendeplans für die Sendeeinrichtung zur Übertragung des Datenstroms;
- Figur 6: eine schematische Darstellung eines dritten Sendeplans für die Sendeeinrichtung zur Übertragung des Datenstroms;
- Figur 7: eine schematische Darstellung des zeitlichen Verlaufs einer Übertragung des Datenstroms für eine bzw. zwei Empfangseinrichtungen, wobei die Übertragung für eine Zeitdauer t_{U} unterbrochen wird;
- Figur 8: eine schematische Darstellung mehrerer Dateneinheiten eines Multimediadatenstroms; und
- Figur 9: eine schematische Darstellung eines weiteren Sendeplans, wobei ein Teil der Dateneinheiten vorab übertragen wird.

Ein Multimediadatenstrom, z.B. ein Spielfilm, soll an eine beliebige Anzahl von Empfangseinrichtungen bzw. Empfängern E₀ ... Eⱼ (j ≥ 1) übertragen werden. Nach dem Empfang wird der Spielfilm mit Hilfe von Wiedergabemitteln, beispielsweise mit Hilfe eines Fernsehers oder eines rechnerbasierten Monitors und einer zugehörigen Lautsprechereinrichtung, der jeweils von den Empfangseinrichtungen E₀ ... Eⱼ umfaßt oder mit diesen so verbunden ist, daß der empfangene Spielfilm an den jeweiligen Fernseher weitergeleitet werden kann. Der Multimediadatenstrom (Spielfilm) wird hierbei (potentiell) kontinuierlich, d.h. ohne Unterbrechung wiedergegeben.

Es wird beispielhaft angenommen, daß der den zu übertragenden Spielfilm beinhaltende Datenstrom in x Dateneinheiten Dₓ (x = 1, 2, ...) teilbar ist, wobei jede der x Dateneinheiten Dₓ mindestens ein Datenbit und vorzugsweise im wesentlichen die gleiche Menge von Daten umfaßt . Die Dateneinheiten Dₓ werden grundsätzlich zu einem Sendezeitpunkt t^{S}ₓ von der Sendeeinrichtung gesendet, zu einem Empfangszeitpunkt t^{E}ₓ von einem der Empfänger empfangen und zu einem Wiedergabezeitpunkt t^{W}ₓ mit Hilfe zugehöriger Wiedergabemittel wiedergegeben. Zur Vereinfachung der folgenden Darstellung des Verfahrens wird für eine Dateneinheit Dₙ (1≤ n ≤ x) die folgende Annahme gemacht: tₙ = t^{S}ₙ = t^{E}ₙ = t^{W}ₙ. Tatsächlich liegt der Empfangszeitpunkt t^{E}ₙ der Dateneinheit Dₙ jedoch später als der Sendezeitpunkt t^{S}ₙ, wobei der zeitliche Abstand zwischen t^{S}ₙ und t^{E}ₙ von den Parametern der Übertragung zwischen der Sendeeinrichtung und der jeweiligen Empfangseinrichtung abhängt. Die Übertragungsverzögerung kann je nach gewähltem Übertragungsmedium konstant sein oder schwanken, wobei letzteres beispielsweise in IP-Netzen der Fall ist. Wenn die Übertragungsverzögerung schwankt, kann zur Vereinfachung eine feste Obergrenze der Übertragungsverzögerung angenommen werden, oder diese Obergrenze kann wiederholt dynamisch ermittelt werden. Auch der Wiedergabezeitpunkt t^{W}ₙ der Dateneinheit Dₙ liegt um eine endliche Zeit verschoben nach dem Empfangszeitpunkt t^{E}ₙ, da die Dateneinheit Dₙ nach dem Empfang an die Wiedergabemittel weitergeleitet und zum Zweck der Wiedergabe (mehrfach) umgewandelt werden muß.

In der folgenden Beschreibung wird in der Regel davon ausgegangen, daß zum Zeitpunkt tₙ die Übertragung für eine Empfangseinrichtung beginnt. Es ist jedoch auch möglich, daß die zum Zeitpunkt tₙ beginnende Übertragung für mehrere Empfangseinrichtung parallel stattfindet, d.h. mehrere Empfangseinrichtungen werden zum Zeitpunkt tₙ "zugeschaltet". Die Sendeeinrichtung sendet in diesem Fall Dateneinheiten aus, die von einer beliebigen Anzahl von Empfangseinrichtungen empfangen werden. Hierbei kann vorgesehen sein, daß die Dateneinheiten von mehreren Sendeeinrichtungen gesendet werden. Beipielsweise ist vorgesehen, daß die einzelnen Sendeeinrichtungen in diesem Fall jeweils nur eine bestimmte Teilmenge der Dateneinheiten des Datenstroms einmalig oder wiederholt sendet.

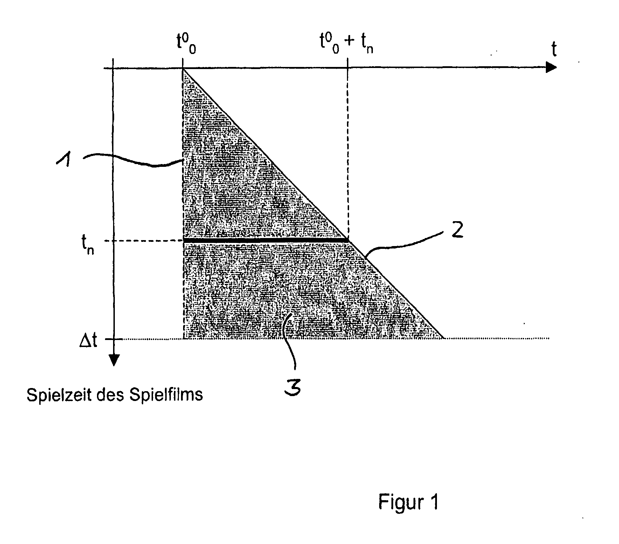

Gemäß Figur 1 wird für die Wiedergabe des Spielfilms, d.h. aller x Dateneinheiten Dₓ mittels des Fernsehers, insgesamt eine Zeitdauer Δt benötigt. Hierbei wird die Dateneinheit Dₙ zu einem Zeitpunkt tₙ nach Beginn der Übertragung (Senden, Empfangen, Wiedergeben) übertragen. Das bedeutet, daß zum Zeitpunkt tₙ nach dem Beginn der Wiedergabe (des Empfangs) des Spielfilms die Dateneinheit Dₙ gesendet/empfangen sein und zur Wiedergabe zur Verfügung stehen muß.

Die Übertragung an eine Empfangseinrichtung Eₖ kann zu einem Zeitpunkt t⁰ₖ (k = 0, 1, ...) beginnen. Nach der obigen Annahme (tₙ = t^{S}ₙ = t^{E}ₙ = t^{W}ₙ) beginnen zum Zeitpunkt t⁰ₖ das Senden, der Empfang und die Wiedergabe. Ab diesem Zeitpunkt empfängt der Empfänger Eₖ (potentiell) alle zum Spielfilm gehörenden Dateneinheiten Dₓ. Dieses wird in Figur 1 mittels einer Einstiegslinie 1 veranschaulicht.

Um die Dateneinheiten Dₙ in der dem Verlauf des Spielfilms entsprechenden Weise wiedergeben zu können, ist es notwendig, daß spätestens zum Zeitpunkt (t⁰ₖ + tₙ) nach dem Beginn der Übertragung des Spielfilms die Dateneinheit Dₙ übertragen sein muß. Bei ununterbrochener Wiedergabe des Spielfilms ergibt sich aus den spätesten Übertragungszeitpunkten tₙ der Dateneinheiten für den Empfänger Eₖ eine Wiedergabelinie 2, die bei (t⁰ₖ, 0) beginnt und bei (t⁰ₖ + Δt, Δt) endet (vgl. Figur 1).

Die Wiedergabelinie 2 und die Einstiegslinie 1 bilden zusammen (mit einer Linie t = Δt) ein Dreieck, einen sogenannten Empfangstrichter 3 des Empfängers Eₖ. Alle Dateneinheiten Dₓ des Spielfilms müssen innerhalb dieses Empfangstrichters 3 an den Empfänger Eₖ übertragen werden, damit der Empfänger Eₖ bzw. dessen zugehörige Wiedergabemittel den Spielfilm vollständig und kontinuierlich darstellen kann.

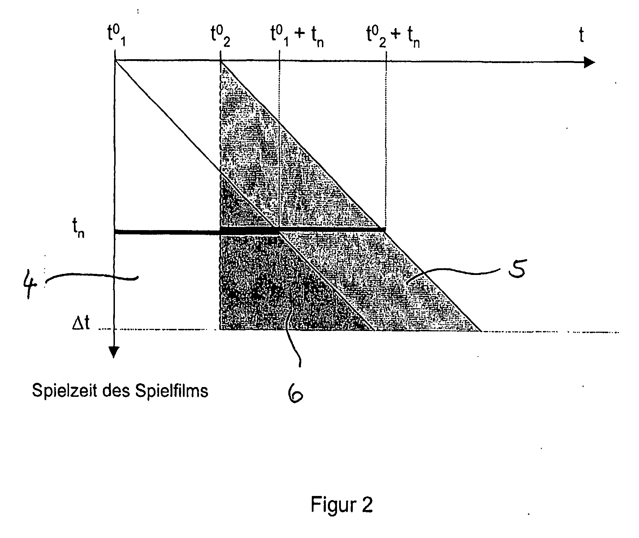

Wird der Spielfilm, d.h. die Dateneinheiten Dₓ von der Sendeeinrichtung für zwei Empfänger E₁ und E₂ (vgl. Figur 2) übertragen, wobei der Empfänger E₂ den Empfang zu einem Einstiegszeitpunkt t⁰₂ beginnt, bevor die zum Einstiegszeitpunkt t⁰₁ begonnene Übertragung des Spielfilms für den bereits aktiven Empfänger E₁ abgeschlossen ist, so überlappen sich die Empfangstrichter 4, 5 der zwei Empfänger E₁ und E₂. Wird die Dateneinheit Dₙ des Spielfilms zu einem Zeitpunkt innerhalb eines Überlappungsbereichs 6 gesendet, so muß diese Dateneinheit Dₙ nur einmal übertragen werden, wenn beide Empfänger E₁ und E₂ in der Lage sind, die Dateneinheit Dₙ bis zu deren jeweiligem Übertragungszeitpunkt (t⁰₁ + tₙ bzw. t⁰₂ + tₙ) - nach der obigen Annahme ist dies der Sende-, Empfangs- und Wiedergabezeitpunkt - in jeweiligen Speichermitteln zwischenzuspeichern. Hierdurch wird die sonst zur individuellen Übertragung an die beiden Empfänger E₁ und E₂ benötigte Bandbreite eingespart. Hierbei erfolgt eine Zwischenspeicherung der Dateneinheit Dₙ grundsätzlich nur dann, wenn die Dateneinheit Dₙ vor dem Zeitpunkt übertragen wird, zu der die Dateneinheit Dₙ im Ablauf des Spielfilms wiederzugeben ist.

Aus der beschriebenen beispielhaften Vorgehensweise ergibt sich, daß eine erste Datenmenge M₁, die zum Zweck der Übertragung des Spielfilms an den Empfänger E₁ oder eine beliebige Anzahl anderer Empfänger, die sich ebenfalls zum Zeitpunkt t⁰₁ zuschalten, übertragen wird, alle Dateneinheiten Dₓ des Datenstroms bzw. des Spielfilms umfaßt. Eine zweite Datenmenge M₂, die beginnend ab dem Zeitpunkt t⁰₂ für den Empfänger E₂ oder eine beliebige Anzahl weiterer Empfänger, die sich auch zum Zeitpunkt t⁰₂ zuschalten, übertragen wird, umfaßt jedoch nur einen Teil der Dateneinheiten Dₓ, da der Empfänger E₂ ab dem Zeitpunkt t⁰₂ neben der für diesen Empfänger E₂ bestimmten Datenmenge M₂ auch die Dateneinheiten der Datenmenge M₁ empfängt, die nach dem Zeitpunkt t⁰₂ übertragen werden.

Ausgehend von der Darstellung des Verfahrens für zwei Empfängern E₁ und E₂ läßt sich das beschriebene Verfahren auf eine Vielzahl von Empfängern E₀ ... Eⱼ (j ≥ 1) erweitern. Hierbei sind zwei grundsätzliche Varianten möglich, die auch miteinander kombinierbar sind:
1. Nutzung eines Rückkanals
   Jeder der Empfänger E₀ ... Eⱼ (j ≥ 1) teilt über einen (interaktiven) Rückkanal der Sendeeinrichtung mit, welches Programm (Medieninhalt) er ab welchem Zeitpunkt empfangen möchte. Im oben beschriebenen Beispiel bedeutet dies, daß die Empfänger mitteilen, ab wann der Spielfilm für den jeweiligen Empfänger übertragen werden soll. Jeder Empfänger Eₖ legt auf diese Weise einen zugehörigen Zeitpunkt t⁰ₖ für den Beginn der Übertragung fest. Die Sendeeinrichtung errechnet aus den eingehenden Anfragen der Empfänger E₀ ... Eⱼ einen Sendeplan, der beschreibt, in welcher Reihenfolge die Dateneinheiten Dₓ zu senden sind, um jeweils in einer möglichst großen Anzahl von Empfangstrichtern der Empfänger übertragen zu werden.
2. Senden ohne Rückkanal

Steht zwischen der Sendeeinrichtung und den Empfängern E₀...Eⱼ kein Rückkanal zur Verfügung, oder wird die Anzahl der Empfänger zu groß, um eine individuelle Ausstrahlung zu ermöglichen, kann die Sendeeinrichtung statt der von den Empfängern angefragten Zeitpunkte t⁰₀...t⁰ⱼ für den jeweiligen Beginn der Übertragung ein vorgegebenes Raster von Zeitpunkten für den Beginn festlegen, beispielsweise Zeitpunkte im Abstand von zehn Sekunden, einer Minute usw. Ein Empfänger wartet dann bis zum nächsten vorgegeben Einstiegszeitpunkt, der dem übertragenen Datenstrom zu entnehmen ist, und beginnt erst dann mit der Wiedergabe, so daß in diesem Fall die von der Sendeeinrichtung vorgegebenen Rasterzeitpunkte den Zeitpunkt t⁰₀...t⁰ⱼ (j ≥ 1) bilden bzw. festlegen.

In beiden Fällen kann die Sendeeinrichtung festlegen, bis zu welchem Zeitpunkt der Datenstrom (Spielfilm) maximal abgerufen werden kann, d.h. wann die letzte Übertragungsanforderung von den Empfängern eingehen darf, die noch erfüllt wird.

Unabhängig von der Verfügbarkeit eines oder mehrerer Rückkanäle, der Anzahl der Empfänger, der Regelmäßigkeit der Einstiegszeitpunkte t⁰₀...t⁰ⱼ, der Länge des Datenstroms (Spielfilms) muß die Sendeeinrichtung bei der Erstellung und/oder dynamischen Anpassung des Sendeplans für die Dateneinheiten Dₓ folgende Anforderungen erfüllen. Im Zusammenhang mit dem Empfänger Eₖ mit dem Einstiegszeitpunkt t⁰ₖ, der einer der mehreren Empfänger E₀...Eⱼ mit unterschiedlichen Einstiegszeitpunkten t⁰₀ ... t⁰ⱼ ist, gilt grundsätzlich das Folgende:
(a) Alle Dateneinheiten, die aufgrund eines anderen Empfängers (E₀ ... Eₖ₋₁, Eₖ₊₁ ... Eⱼ) innerhalb des Empfangstrichters von Eₖ übertragen werden, müssen nicht noch einmal für Eₖ übertragen werden. Eine Übertragung innerhalb des Empfangstrichters von Eₖ bedeutet hierbei, daß eine Dateneinheit Dₙ in einem Intervall [t⁰ₖ; t⁰ₖ + tₙ] übertragen wird.
(b) Eine gemäß (a) nicht übertragene Dateneinheit Dₘ muß spätestens zum Zeitpunkt (t⁰ₖ + tₘ) für Eₖ übertragen werden, um der zeitliche Abfolge des Spielfilms entsprechend wiedergegeben werden zu können.

Für zwei Empfänger E₁ und E₂ (vgl. Figur 2) wird die Übertragungsbandbreite optimal genutzt, wenn möglichst viele der Dateneinheiten innerhalb beider Übertragungstrichter 4, 5 gesendet werden, also in diesem Fall möglichst "nah an bzw. entlang" der Wiedergabelinie von E₁, da alle diese Dateneinheiten nur einmal übertragen werden müssen.

Auf der Empfängerseite geht ein Empfänger Eₖ ab dem Beginn des Empfangs des Datenstroms, d.h. der Dateneinheiten, wie folgt vor: Zu einem beliebigen Zeitpunkt tₓ wird die Dateneinheit Dₙ übertragen (gesendet, empfangen), die im Rahmen der Übertragung des Datenstroms zum Zeitpunkt tₙ zu übertragen ist, und
i) an die zugehörige Wiedergabeeinrichtung übergeben, falls tₓ = tₙ ist;
ii) in Speichermitteln des Empfängers Eₖ gespeichert, falls tₓ < tₙ ist, d.h. die Dateneinheit Dₙ zu einem späteren Zeitpunkt zur Wiedergabe benötigt wird und die Dateneinheit Dₙ noch nicht in den Speichermitteln vorliegt;
iii) verworfen, falls tₓ > tₙ ist, d.h. die die Dateneinheit Dₙ zum Zeitpunkt tₓ für die Wiedergabe nicht mehr von Bedeutung ist, oder bereits in den Speichermitteln vorliegt.

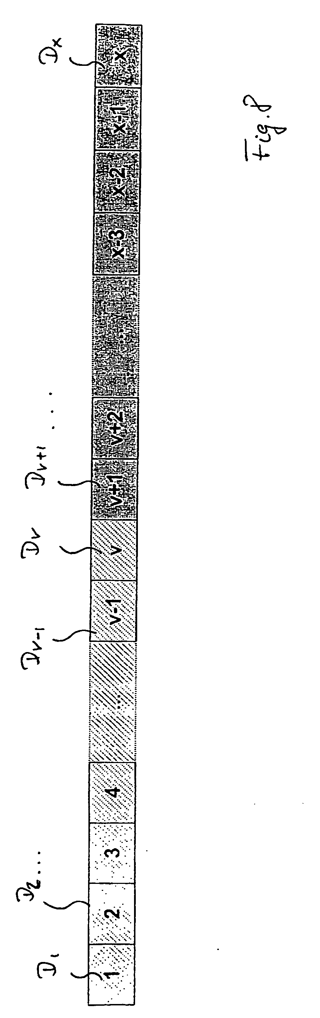

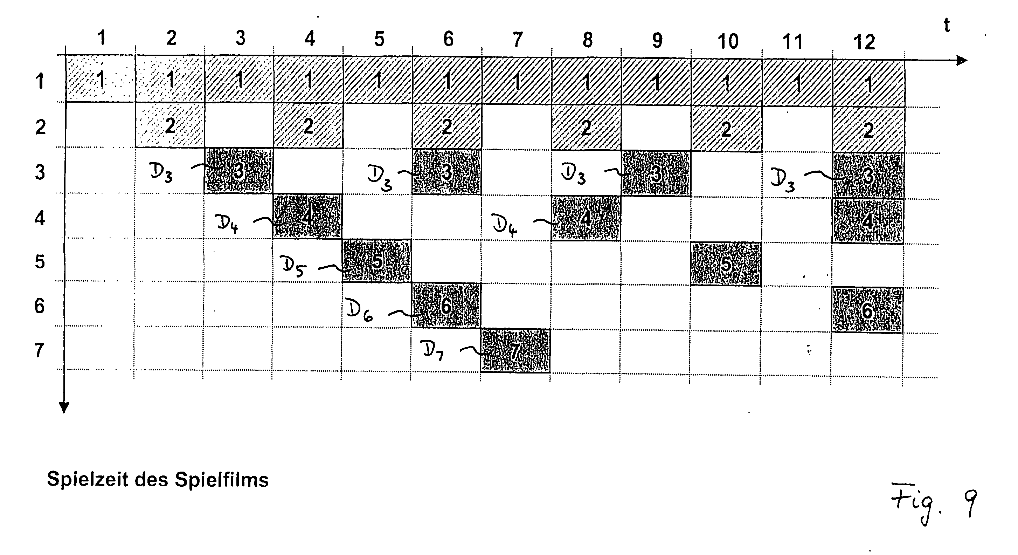

Außerdem wird zum Zeitpunkt tₛ die Dateneinheit Dₙ aus den Speichermitteln genommen und an die Wiedergabeeinrichtung übergeben, wenn tₛ = tₙ und die Dateneinheit Dₙ gemäß ii) gespeichert oder vorab übertragen bzw. verteilt wurde (vgl. Beschreibung zu Figuren 8 und 9). In den Empfängern E₀...Eⱼ wird also Speicherplatz (potentiell in Form einer Festplatte) benötigt, auf dem die empfangenen und noch nicht benötigten Dateneinheiten temporär abgelegt werden, bis der Zeitpunkt zur Wiedergabe gekommen ist.

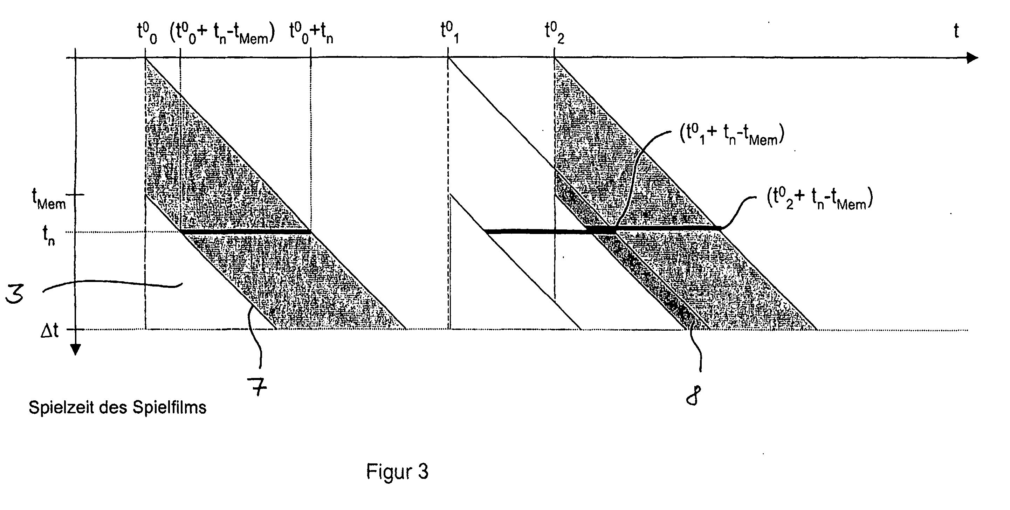

Die Empfänger E₀...Eⱼ verfügen i.d.R. nur über eine endliche Speicherkapazität. Ist das zu einem Zeitpunkt vorübergehend zu speichernde Volumen der Dateneinheiten Dₓ größer als als die verfügbare Speicherkapazität - können etwa immer nur maximal 10 Minuten des Spielfilms gespeichert werden - so ergeben sich veränderte Anforderungen an die Sendeeinrichtung und die Empfänger E₀...Eⱼ. Eine Speichergrenzlinie 7 schränkt den Empfangstrichter 3 ein (vgl. Figur 3). Dateneinheiten, deren Wiedergabezeitpunkt bei einer frühen Übertragung zu weit in der Zukunft liegt, werden beim Empfang noch nicht gespeichert. Statt dessen wird auf eine erneute Übertragung zu einem späteren Zeitpunkt gewartet.

Für einen Empfänger Eₖ mit dem Einstiegszeitpunkt t⁰ₖ, der einer von E₀ ... Eⱼ Empfängern mit unterschiedlichen Einstiegszeitpunkten t⁰₀ ... t⁰ₙ ist, ergibt sich bei einer Speicherbegrenzung auf eine Zeitdauer t_{Mem}:
(a) Alle Dateneinheiten, die aufgrund eines anderen Empfängers (E₀ ... Eₖ₋₁, Eₖ₊₁ ... Eₙ) innerhalb des modifizierten Empfangstrichters von Eₖ übertragen werden, müssen nicht noch einmal für Eₖ übertragen werden. Eine Übertragung innerhalb des Empfangstrichters von Eₖ bedeutet, daß eine Dateneinheit Dₙ im Intervall frühestens zum Zeitpunkt t⁰ₖ und im Intervall [t⁰ₖ + tₙ - t_{Mem}; t⁰ₖ + tₙ] gesendet wird.
(b) Eine gemäß (a) nicht übertragene Dateneinheit Dₘ muß spätestens zum Zeitpunkt (t⁰ₖ + tₘ) versendet werden, jedoch nicht vor t⁰ₖ und nicht vor (t⁰ₖ + tₙ - t_{Mem}).

Auf der Empfängerseite verändert sich das Verfahren bei Berücksichtigung des Parameters t_{Mem}. Mit dem Beginn des Empfangs eines Datenstroms, geht die Empfangseinrichtung eines Empfängers Eₖ wie folgt vor: Zu einem beliebigen Zeitpunkt tₓ wird die Dateneinheit Dₙ übertragen (gesendet, empfangen), die im Rahmen der Übertragung des Datenstroms zum Zeitpunkt tₙ zu übertragen ist, und
i) an die zugehörige Wiedergabeeinrichtung übergeben, falls tₓ = tₙ ist;
ii) in Speichermitteln des Empfängers Eₖ gespeichert, falls tₓ < tₙ und tₓ > tₙ - t_{Mem} ist, d.h. die Dateneinheit Dₙ zu einem späteren Zeitpunkt zur Wiedergabe benötigt wird, der aber noch im Bereich der "Reichweite" (Speicherkapazität) der Speichermittel liegt, und die Dateneinheit Dₙ noch nicht in den Speichermitteln vorliegt;
iii) verworfen, falls tₓ > tₙ ist, d.h. die die Dateneinheit Dₙ zum Zeitpunkt tₓ für die Wiedergabe nicht mehr von Bedeutung ist, oder bereits in den Speichermitteln vorliegt oder (tₓ ≤ tₙ - t_{Mem}).

Außerdem wird zum Zeitpunkt tₛ die Dateneinheit Dₙ aus den Speichermitteln genommen und an die Wiedergabeeinrichtung übergeben, wenn tₛ = tₙ und die Dateneinheit Dₙ gemäß ii) gespeichert oder vorab übertragen bzw. verteilt wurde (vgl. Beschreibung zu Figuren 8 und 9).

Gemäß Figur 3 vermindert sich der Überlappungsbereich 6 der Empfangstrichter 3 der Empfänger E₁ und E₂ im Fall der mittels t_{Mem} charakterisierten, begrenzten Speicherkapazität der Empfänger E₁ und E₂ auf eine verminderten Überlappungsbereich 8.

Die Sende- und Empfangsregeln, die hier für diese Verfahrensabwandlung angegeben sind, stellen nur ein mögliches Beispiel dar. Es hängt vom konkreten Sendeplan ab, ob zu einem Zeitpunkt auch weiter in der Zukunft als t_{Mem} gelegene Dateneinheiten zwischengespeichert werden können. Insgesamt ist von Sender und Empfänger lediglich gemeinsam Sorge zu tragen, daß die Dateneinheit Dₙ zum Zeitpunkt tₙ beim Empfänger vorliegt.

Während sich aus den oben beschriebenen Verfahren für die Empfangsseite jeweils direkt ein Algorithmus zur Realisierung ableitet, können für die Sendeseite eine Reihe von Regeln angegeben werden, die bei der Erstellung eines Sendeplans für das Senden der Dateneinheiten Dₓ mittels der Sendeeinrichtung zu erfüllen sind.

Im folgenden wird zunächst ein mögliches Übertragungsverfahren beispielhaft beschrieben, das den obigen Regeln genügt und einfach zu implementieren ist. Im Anschluß werden exemplarisch drei Vorgehensweisen zur Erstellung eines Sendeplans für die Dateneinheiten beschrieben. Für das Übertragungsverfahren wie auch zur Sendeplanerstellung sind auch andere Formen der Realisierung denkbar.

Bei der beispielhaften Erstellung eines Übetragungs-/Sendeplans für den von der Sendeeinrichtung an die Empfänger zu übertragenden Datenstrom werden die folgenden Regeln berücksichtigt:
1) Der Datenstrom wird dadurch in einen übertragbaren Datenstrom transformiert, daß der Datenstrom in vorzugsweise gleich große voneinander abgrenzbare Dateneinheiten Dₓ (x = 1,2,...) aufgeteilt wird. Die Dateneinheiten Dₓ können beliebig klein sein, im Extremfall auch nur einzelne Bytes oder Bits umfassen. Diese gegeneinander abgrenzbaren Dateneinheiten Dₓ werden auch als "Slots" bezeichnet.
2) Die Dateneinheiten Dₓ werden jeweils möglichst spät gesendet, d.h. möglichst nah an der Wiedergabelinie der Empfänger E₀...Eⱼ, so daß die Dateneinheiten Dₓ in einer möglichst großen Anzahl der Empfangstrichter der Empfänger E₀...Eⱼ liegen, um die für die Übertragung aufgewendete Bandbreite zu minimieren.
3) Um eine möglichst gleichmäßige Auslastung des Übertragungsmediums zu erzielen bzw. eine temporäre Überlastung zu vermeiden, können Dateneinheiten bereits zu einem früheren Zeitpunkt gesendet werden. Auf diese Weise lassen sich Lastspitzen ausgleichen, jedoch muß die verfrüht gesendete Dateneinheit ggf. noch einmal gesendet werden, da sie bei der verfrühten Übertragung im Empfangstrichter von weniger Empfängern liegen könnte, als dies der Fall wäre, wenn die Dateneinheit nicht verfrüht gesendet worden wäre. Der Vermeidung von Lastspitzen steht dann im Gegensatz zur Minimierung des insgesamt übertragenen Datenvolumens.

Im folgenden sind drei Beispiele für die Verteilung der Dateneinheiten Dₓ (Sendeplan) zur Übertragung angegeben. Es wird angenommen, daß alle Dateneinheiten Dₓ Informationen gleicher Dauer umfassen, d.h., im Fall des Spielfilms, einen Spielfilmabschnitt gleicher Zeitdauer. Die Dauer einer Dateneinheit definiert gleichzeitig die Granularität der Einstiegszeitpunkte t⁰ⱼ (j ≥ 0) für die Empfänger Eⱼ (j ≥ 0). Bei einer Dauer einer Dateneinheit von zehn Sekunden, wird bei diesem Verfahren ohne Rückkanal alle zehn Sekunden ein neuer (virtueller) Empfänger angenommen, d.h. Betrachter können alle zehn Sekunden neu hinzukommen, um den Spielfilm von Anfang an zu betrachten. In der folgenden Darstellung werden die Dateneinheiten Dₓ (x = 1, 2...) durchnumeriert.

Die im folgenden beschriebenen Ausführungsformen sind lediglich Beispiele. Darüber hinaus gestattet das Verfahren:
- daß die Größe/Dauer der Dateneinheiten nicht gleich ist,
- daß die Dauer der Dateneinheit und die Granularität der Einstiegszeitpunkte t⁰ⱼ (j ≥ 0) unterschiedlich sind, und/ oder
- daß die Einstiegszeitpunkte t⁰ⱼ (j ≥ 0) mit und ohne Rückkanal beliebig verteilt sein können.

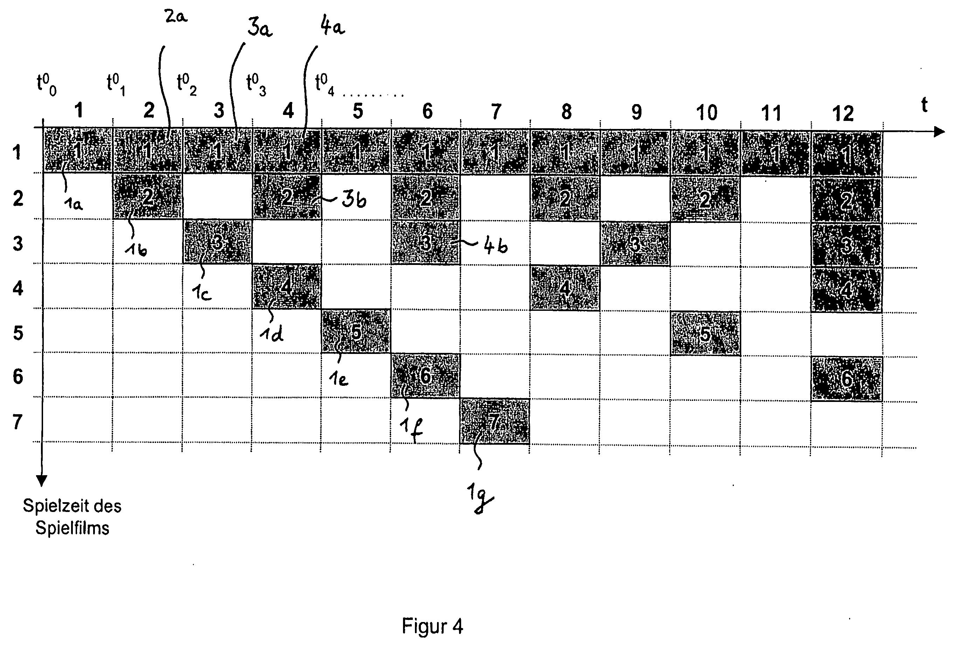

Figur 4 zeigt ein Beispiel für einen harmonischer Sendeplan, wobei der zu übertragende Datenstrom in sieben Dateneinheiten D₁ ... D₇ unterteilt ist. Die Zeitachse wird in Intervalle gleicher Länge unterteilt, wobei die Intervalle der Dauer der sieben Dateneinheiten Dₓ entsprechen. Zur Übertragung werden die Dateneinheiten D₁ ... D₇ nach einer einfachen Regel für die Übertragung auf die Zeitintervalle verteilt: Die Dateneinheit Dₙ mit der Laufnummer n wird in jedem n-ten Intervall übertragen, d.h. die erste Dateneinheit D₁ in jedem Intervall, die zweite Dateneinheit D₂ in den Intervallen 2, 4, 6, ..., die dritte Dateneinheit D₃ in den Intervallen 3, 6, 9, ... usw. Die jeweiligen Anfangszeitpunkte der Intervalle bilden die möglichen Einstiegszeitpunkte t⁰ⱼ (j ≥ 0) für die Empfänger Eⱼ (j ≥ 0) (vgl. Figur 4).

Für einen ersten Empfänger E₀ wird gemäß Figur 4 eine Datenmenge M₀ übertragen, die alle sieben Dateneinheiten D₁ ... D₇ umfaßt. Die für den ersten Empfänger übertragenen Dateneinheiten sind mit den Bezugszeichen 1a bis 1g bezeichnet. Wenn zum Zeitpunkt t⁰₁ ein zweiter Empfänger E₁ zugeschaltet wird, für den der Datenstrom, beginnend ab t⁰₁, übertragen werden soll, so umfaßt eine für den zweiten Empfänger E₁ übertragenen Datenmenge M₁ lediglich die Dateneinheit D₁, die in Figur 4 mit 2a bezeichnet ist. Die übrigen Dateneinheiten D₂ ... D₇, die zur Wiedergabe des Datenstroms für den Nutzer des zweiten Empfängers E₁ ebenfalls an den zweiten Empfänger E₁ übertragen werden müssen, "entnimmt" der zweite Empfänger E₁, beginnend ab t⁰₁ der Datenmenge M₀. Für den zweiten Empfänger E₁ muß deshalb eine wesentlich geringere Anzahl der Dateneinheiten gesendet werden, so daß Übertragungsbandbreite eingespart wird.

Wenn zum Zeitpunkt t⁰₂ ein dritter Empfänger E₂ zugeschaltet wird, für den der Datenstrom beginnend ab t⁰₂ übertragen werden soll, so umfaßt eine für den dritten Empfänger E₂ übertragenen Datenmenge M₂ die Dateneinheiten D₁ und D₂, die in Figur 4 mit 3a bzw. 3b bezeichnet sind. Die übrigen Dateneinheiten D₃ ... D₇, die zur Wiedergabe des Datenstroms für den Nutzer des dritten Empfängers E₂ ebenfalls übertragen werden müssen, "entnimmt" der dritte Empfänger E₂, beginnend ab t⁰₂ der Datenmenge M₀, nämlich D₃ ... D₇ (lc bis 1g in Figur 4).

Wenn zum Zeitpunkt t⁰₃ ein vierter Empfänger E₃ zugeschaltet wird, für den der Datenstrom beginnend ab t⁰₃ übertragen werden soll, so umfaßt eine für den vierten Empfänger E₃ übertragene Datenmenge M₃ die Dateneinheiten D₁ und D₃, die in Figur 4 mit 4a bzw. 4b bezeichnet sind. Die übrigen Dateneinheiten D₂, D₄ ... D₇, die zur Wiedergabe des Datenstroms für den Nutzer des dritten Empfängers E₂ ebenfalls übertragen werden müssen, "entnimmt" der vierte Empfänger E₃, beginnend ab t⁰₃ der Datenmenge M₀, nämlich die Dateneinheiten D₄ ... D₇ (1d bis 1g), und der Datenmenge M₂, nämlich die Dateneinheit D₂ (3b ind Figur 4).

Sowohl bei dem im Zusammenhang mit Figur 4 beschriebenen Ausführungsbeispiel als auch bei den im Folgenden erläuterten Ausführungsbeispielen können eine oder mehrere der gesendeten Dateneinheiten jeweils von einer oder mehreren der Datenmengen Mⱼ (j ≥ 0) umfaßt sein.

Der unter Bezugnahme auf Figur 4 beschriebene harmonische Sendeplan hat den Nachteil, daß die in einem Zeitintervall zu sendende Anzahl von Dateneinheiten Dₓ stark variiert. So wird im Zeitintervall 1 nur eine Dateneinheit (die erste Dateneinheit D₁) gesendet, in den Intervallen 2, 3 und 5 zwei, im Intervall 4 drei und im Intervall 6 vier (wird für spätere Intervalle entsprechend fortgesetzt). Das führt zu Lastspitzen, und zwar mit der Konsequenz, daß die Übertragungskapazität vom Sender zu den Empfängern E₀...Eⱼ an der größten Lastspitze ausgerichtet werden muß, die Übertragungskapazität für einen Großteil der übrigen Übertragungszeit jedoch nicht ausgenutzt wird.

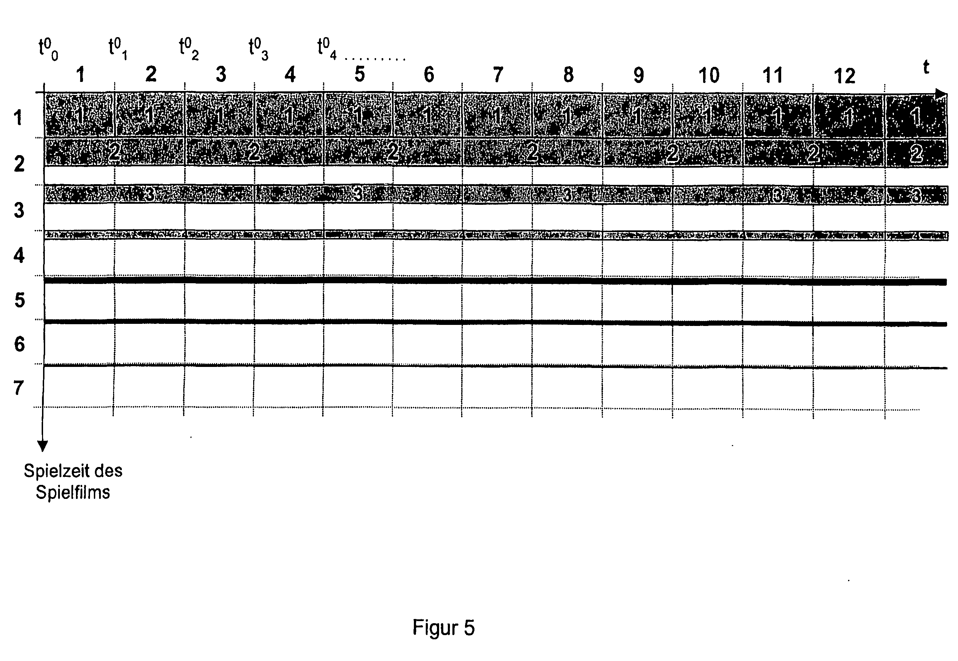

Figur 5 zeigt eine Abwandlung des Verfahrens nach Figur 4, die auf eine gleichmäßigere Auslastung des Übertragungsmediums bzw. der Übertragungskapazität abzielt: Es wird in jedem (1 + p · n)-ten Intervall (p ≥ 0) damit begonnen, die Dateneinheit Dₙ zu senden. Das Versenden wird jedoch nicht im selben Intervall abgeschlossen (außer bei der ersten Dateneinheit D₁), vielmehr wird die Übertragung auf n Intervall verteilt: Die Dateneinheit D₁ wird in jedem Intervall übertragen. Die Dateneinheit D₂ in den Intervallen 1 bis 2, 3 bis 4, 5 bis 6, .... Die Dateneinheit D₃ in den Intervallen 1 bis 3, 4 bis 6, 7 bis 9, .... Das bedeutet bei einer gleichmäßigen Aufteilung einer Dateneinheit Dₓ über die zu nutzenden Zeitintervalle, daß die Dateneinheit D₁ durchschnittlich mit einfacher Bandbreite gesendet wird, die zweite Dateneinheit D₂ durchschnittlich mit halber Bandbreite, die dritte Dateneinheit D₃ durchschnittlich mit ein Drittel der Bandbreite usw. - also die m-te Dateneinheit Dₘ mit durchschnittlich 1/m der Bandbreite, die benötigt würde, um die Dateneinheit Dₘ innerhalb eines Zeitintervalls zu übertragen. Die jeweiligen Anfangszeitpunkte der Intervalle bilden wiederum die Einstiegszeitpunkte t⁰ⱼ (j ≥ 0) für die Empfänger (vgl. Figur 5).

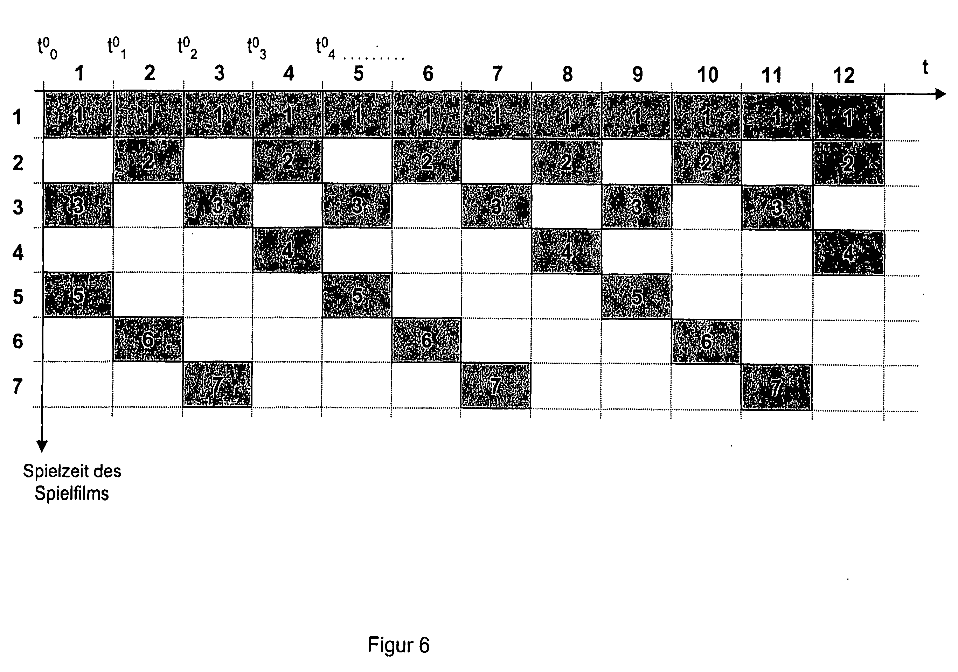

Wenn es aufgrund des technischen Übertragungsverfahrens und/oder der Anzahl der Dateneinheiten Dₓ nicht möglich ist, die Übertragung der m-ten Dateneinheit Dₘ (gleichmäßig) auf m Zeitintervalle zu verteilen, läßt sich ein vergleichbarer Effekt, wenn auch bei leicht höherem Übertragungsvolumen, wie folgt erzielen (vgl. Figur 6):
- Falls m=2^{z} ist mit z ≥ 0 (also m eine Zweierpotenz ist), wird die m-te Dateneinheit Dₘ in jedem m-ten Intervall übertragen (vgl. Figur 6).
- Andernfalls werden alle m-ten Dateneinheiten Dₘ, für die 2^{z} < m < 2^{z+1} mit j ≥ 0 gilt, genau einmal zwischen den Zeitintervallen 2^{z} und 2^{z+1} übertragen, und zwar in beliebiger (aber gleichbleibender) Reihenfolge.

Das heißt, die Dateneinheiten D₁, D₂, D₄, ... werden in jedem, jedem zweiten, jedem vierten usw. Zeitintervall gesendet. Die Dateneinheit D₃ wird jeweils in den Pausen zwischen den Dateneinheiten D₂, also in den Zeitintervallen 1, 3, 5, 7 usw. gesendet. Die Dateneinheiten D₅ bis D₇ mit den Laufnummern 5 bis 7 werden nacheinander jeweils einmal in der Folge von Zeitintervallen gesendet, in denen die Dateneinheit D₄ nicht gesendet wird, also in den Zeitintervallen 1, 2 und 3; 5, 6 und 7; 9, 10 und 11 usw.

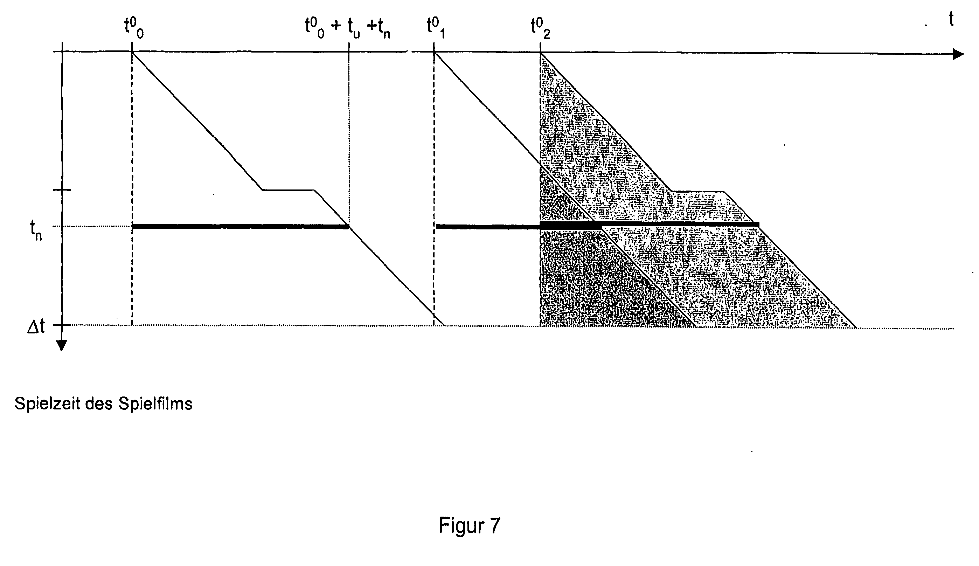

Figur 7 zeigt einen veränderten Verlauf der Empfangstrichter im Fall der Übertragung des Datenstroms an einen bzw. an zwei Empfänger, wenn die Wiedergabe des Spielfilms für eine Zeit t_{U} unterbrochen und danach wieder fortgesetzt wird. Hierbei kann zwischen zwei Formen von Empfängern unterschieden werden. Bei einer Form von Empfängern werden die Dateneinheiten während der Unterbrechung im Hintergrund weiterhin empfangen und gespeichert. Dies führt dann zu einem erweiterten Empfangstrichter. Bei einer anderen Form von Empfängern werden die Dateneinheiten während der Unterbrechung nicht empfangen, was zu einem verschobenen Empfangstrichter führt. In beiden Fällen dürfen die Empfänger die bereits gespeicherten Dateneinheiten während der Wiedergabeunterbrechung nicht verwerfen.

Das beschriebene Verfahren basiert darauf, daß Dateneinheiten Dₓ so übertragen werden, daß die Empfänger alle für die kontinuierliche Darstellung des Multimediadatenstroms erforderlichen Dateneinheiten Dₓ erhalten, gleichgültig, wann sie mit dem Empfang beginnen. Die verschiedenen beschriebenen Sendepläne (vgl. Figuren 4 bis 6) erläutern beispielhaft, wann und wie oft eine bestimmte Dateneinheit Dₓ gesendet werden muß, um die Anforderungen der kontinuierlichen Wiedergabe des Multimediadatenstroms zu erfüllen. Hierbei ergibt sich insbesondere, daß die ersten Dateneinheiten D₁ des Multimediadatenstroms besonders oft übertragen werden und somit einen hohen Anteil an der für das Verfahren erforderlichen Bandbreite haben. Für eine Übertragung eines 2-Stunden-Spielfilms mit 7200 gleich großen Dateneinheiten Dₓ gemäß des beschriebenen Verfahrens wurde eine optimale Bandbreite berechnet, die etwa dem 9,45-fachen der Sendebandbreite beim Übertragen dieses Spielfilms nach einem üblichen, einfachen Aussenden des Spielfilms entspricht. Der Faktor variiert in Abhängigkeit von der Länge des Spielfilms und der Anzahl der Dateneinheiten Dₓ.

Eine weitere Verbesserung des beschriebenen Verfahrens hinsichtlich der durchschnittlich benötigten Sendebandbreite kann dadurch erreicht werden, daß eine Teilmenge D₁, ..., Dᵥ (1 ≤ v < x) der Dateneinheiten Dₓ, beispielsweise die ersten 60 Sekunden des Spielfilms, nicht entsprechend des beschriebenen Verfahrens übertragen werden, sondern dem Empfänger bereits lokal zur Verfügung stehen, z.B. als Datei, aus der diese Dateneinheiten D₁, ..., Dᵥ ausgelesen werden. Auf diese Weise kann in dem oben erwähnten Beispiel die erforderlich Bandbreite von dem Faktor 9,5 auf etwa 4,8 vermindert werden.

In Figur 8 ist ein Multimediadatenstrom schematisch dargestellt, welcher die Dateneinheiten Dₓ umfaßt. Der Multimediadatenstrom umfaßt eine Teilmenge von Dateneinheiten D₁, ..., Dᵥ und eine Teilmenge von Dateneinheiten Dᵥ₊₁, ..., Dₓ. Die Teilmenge der Dateneinheiten Dᵥ₊₁, ..., Dₓ wird gemäß des oben beschriebenen Verfahrens an den oder alle Empfänger übertragen. Vorab wird die Teilmenge von Dateneinheiten D₁, ..., Dᵥ an den oder alle Empfänger verteilt, so daß die Dateneinheiten D₁, ..., Dᵥ vor Beginn einer Wiedergabe des Multimediadatenstroms in dem oder allen Empfängern vorliegen. Hierdurch wird die benötigte Sendebandbreite beim Übertragen der Teilmenge von Dateneinheiten Dᵥ₊₁, ..., Dₓ gemäß des beschriebenen, neuen Verfahrens vermindert.

Das Vorabverteilen der Teilmenge der Dateneinheiten D₁, ..., Dᵥ an den oder alle Empfänger kann in beliebiger Weise gemäß üblicher Verfahren erfolgen, beispielsweise mittels Web-Prefetching, mittels Dateiverteilung (z.B. über Satellit), als Bestandteil einer elektronischen Programmzeitschrift, auf CDs usw. Die vorab verteilten Dateneinheiten D₁, ..., Dᵥ können beim Verteilen verschlüsselt übertragen werden.

Figur 9 zeigt einen zum Sendeplan in Figur 4 ähnlichen Sendeplan zum Verteilen der Dateneinheiten Dₓ schematisch. Die Dateneinheiten D₁ und D₂ werden im Unterschied zu dem in Verbindung mit Figur 4 beschriebenen Verfahren vorab nicht gemäß des gezeigten Sendeplans an den/die Empfänger verteilt und sind deshalb schraffiert gezeichnet. Die weiteren Dateneinheiten Dᵥ₊₁ (v ≥ 1) werden dann gemäß des Verfahrens an den/die Empfänger übertragen, welches im Zusammenhang mit Figur 4 beschrieben wurde. Hierbei entsprechen die Häufigkeit des Sendens der weiteren Dateneinheiten Dᵥ₊₁ sowie deren zeitliche Reihenfolge innerhalb des Sendeplans der mittels des Indexes v+1 jeweils gekennzeichneten Stellung der weiteren Dateneinheiten Dᵥ₊₁ (v ≥ 1) in dem Datenstrom der Dateneinheiten Dₓ (vgl. Figur 9). Dieses gilt in entsprechender Weise, wenn die weiteren Dateneinheiten Dᵥ₊₁ (v ≥ 1) gemäß der in den Figuren 5 oder 6 schematisch gezeigten Sendepläne gesendet werden.

In der bisherigen Darstellung wird davon ausgegangen, daß alle Dateneinheiten Dₓ eines Spielfilms immer von allen Empfängern (die begonnen haben, den Spielfilm zu betrachten) empfangen werden, und daß die Empfänger die Dateneinheiten, die sie nicht benötigen, verwerfen. Insbesondere werden hierbei alle Empfänger als gleich angesehen, vor allem bezüglich
- der von ihnen geforderten Empfangsbandbreite und
- der Zahl der ihnen angebotenen Einstiegspunkte t⁰ₖ (falls kein Rückkanal verfügbar ist).

D.h. alle Dateneinheiten Dₓ eines Spielfilms werden in demselben Übertragungskanal gesendet und erreichen in diesem einen Übertragungskanal alle Empfänger. Unterschiedliche Spielfilme werden jedoch potentiell auf verschiedenen Übertragungskanälen gesendet. Dieses Vorgehen ist analog zu Radio und Fernsehen, wo ebenfalls unterschiedliche Sender unterschiedliche Übertragungskanäle (hier Sendefrequenzen) nutzen.

Eine Unterscheidung verschiedener Kanäle für unterschiedliche Spielfilme / Programme kann hierbei alle denkbaren Formen annehmen: Sendefrequenzen, Zeitscheiben in Frequenzen, Frequenzbereiche, Bit- und/oder Bytepositionen in kontinuierlichen Datenströmen wie auch in Datenpaketen, Netzwerk- und/oder Transportadressen (für ATM-, IP- und beliebige andere Netze) usw. Diese Möglichkeiten der Realisierung der Unterscheidung verschiedener Kanäle gilt gleichermaßen für die im Folgenden vorgestellten Subkanäle.

### Unterteilung in Haupt- und Subkanäle

Um die Anforderungen an die Empfänger heterogener gestalten zu können, und ggf. in Zusammenhang hiermit oder als Ergänzung unterschiedliche Leistungen anbieten zu können, ist in Ergänzung zur Übertragung eines Spielfilms / Programms in einem Kanal eine weitergehende Unterstrukturierung dieses Kanals in Subkanäle pro Spielfilm / Programm denkbar.

In diesem Fall werden nicht alle Dateneinheiten Dₓ (Slots) auf demselben Kanal (dem Hauptkanal) gesendet, sondern entsprechend der Zielsetzung auf mehrere Subkanäle verteilt. Unter anderem sind folgende Anwendungsszenarien auf diese Weise realisierbar:

### a) Kundenspezifische Werbung

Auf die Spieldauer eines Spielfilms verteilt werden mehrere Werbeblöcke W₁ bis Wₙ eingestreut. Ein solcher Werbeblock Wₖ benötigt zu seiner Übertragung die Dateneinheiten D_{k,l} bis D_{k,m}. Wird nur eine Art Werbung für das gesamte Publikum gesendet, so werden die Werbeblöcke als Bestandteil des einen Übertragungskanals gesendet. Sollen verschiedene Arten von Werbung (pro Werbeblock) unterschieden werden, werden die jeweiligen Dateneinheiten auf unterschiedlichen Unterkanälen versandt. Jeder Empfänger wählt zusätzlich zum Hauptkanal einen oder mehrere Zusatzkanal:

| **Kanal** | **Dateneinheiten (Slots)** |
|---|---|
| Hauptkanal | Inhalt des Spielfilms |
| Subkanal 1 | Werbung "Sport" |
| Subkanal 2 | Werbung "Spirituosen" |
| ... | |
| Subkanal w | Werbung "Haushalt" |

Werbung ist hier nur ein Beispiel. Einschübe anderer Informationsarten (etwa Kurznachrichten, (regionale) Verkehrsinformationen, unterschiedliche Teile eines Spielfilms (etwa zensiert/ unzensiert usw.) sind mit demselben Mechanismus realisierbar.

### b) Unterschiedliche Versionen eines Spielfilms (Happy End vs. tragisches Ende)

Ab einem bestimmten Zeitpunkt t_{E} im Film (alle Dateneinheiten Dₓ mit x > E) werden unterschiedliche Inhalte auf unterschiedlichen Kanälen ausgesendet. Jeder Empfänger entscheidet individuell, welchen dieser Kanäle er sehen möchte.

| **Kanal** | **Dateneinheiten (Slots)** |
|---|---|
| Hauptkanal | Inhalt des Spielfilms bis D_{E} |
| Subkanal I | Dateneinheiten Dₓ mit x > E für "Happy End" |
| Subkanal II | Dateneinheiten Dₓ mit x > E für "Tragisches Ende" |
| Subkanal III | Dateneinheiten Dₓ mit x > E für "Überraschendes Ende" |

Hier ist insbesondere zu beachten, daß eine Kombination der Ausstrahlung verschiedener Enden mit der Erfindung dazu führt, daß nur ein überproportional geringerer Teil zusätzlicher Informationen gesendet werden muß. Gemäß den exemplarisch vorgestellten Sendeplänen werden Dateneinheiten mit Inhalten, die am Ende eines Spielfilms liegen, deutlich seltener gesendet, als solche mit Inhalten vom Anfang des Spielfilms.

### c) Einfache Spielfilmübertragung vs. gemäß der Erfindung erweiterte

Die Übertragung der Dateninhalte läßt sich so gestalten, daß einerseits einfache (d.h. nicht gemäß der Erfindung erweiterte) Empfänger den Spielfilm empfangen und wiedergeben können, jedoch nur zu dem vorgegebenen Anfangszeitpunkt der ersten Übertragung t⁰₀, andererseits erfindungsgemäße Empfänger zu verschiedenen Zeitpunkten mit der Betrachtung des Spielfilms beginnen können.

Hierzu wird z.B. auf dem Hauptkanal nur die initiale Übertragung des Spielfilms vorgenommen und sukzessive jede Dateneinheit genau einmal übertragen. Auf einem anderen Kanal (hier als Subkanal I bezeichnet) werden gemäß der Erfindung die ergänzenden Informationen übertragen. Einfache Empfänger empfangen nur den Hauptkanal, erweiterte Empfänger hingegen auch den Ergänzungskanal.

Es ist denkbar, den Spielfilm auf dem Hauptkanal wiederholt vollständig zu übertragen (etwa im 2-Stunden-Takt).

| **Kanal** | **Dateneinheiten (Slots)** |
|---|---|
| Hauptkanal | Inhalt des Spielfilms einmalig übertragen wie normaler Rundfunk / normales Fernsehen (die Dateneinheiten 1a, 1b, ..., 1g aus Figur 4, wenn Übertragung gemäß des in Figur 4 dargestellten Verfahrens) |
| Subkanal I | Ergänzende Informationen, die zur Realisierung der Erfindung notwendig sind (alle anderen Dateneinheiten aus Figur 4) |

Dieses Verfahren läßt sich nicht zur Unterstützung konventioneller Empfänger einsetzen; es ist z.B. auch eine Kombination mit Datenverschlüsselung denkbar. So kann etwa der Hauptkanal unverschlüsselt und damit jedem zugänglich übertragen werden, der Subkanal hingegen verschlüsselt. Ein Empfänger ohne Kenntnis des Schlüssels kann den Spielfilm dann nur zum ersten Einstiegspunkt betrachten, ein Empfänger mit Kenntnis des Schlüssels hingegen zu einem beliebigen Zeitpunkt einsteigen und den Spielfilm trotzdem von Anfang an betrachten. So lassen sich einfach unterschiedliche Tarifmodelle für verschiedene Kundengruppen schaffen (siehe auch nächster Abschnitt).

### d) Unterschiedliche Granularität von Einstiegszeitpunkten

In Erweiterung zu Abschnitt c) läßt sich auch die Granularität der Einstiegspunkte durch Nutzung verschiedener Übertragungskanäle einstellen. Auf einem Hauptkanal kann beispielsweise, wie im Abschnitt c) beschrieben, der Spielfilm nur einmalig übertragen werden, auf Subkanal I die notwendigen Zusatzinformationen, um alle 10 Minuten in den Spielfilm einsteigen zu können, auf Subkanal II die Zusatzinformationen, um jede Minute mit der Betrachtung beginnen zu können usw. Selbstverständlich sind hier auch beliebige andere Kombinationen denkbar.

| **Kanal** | **Dateneinheiten (Slots)** |
|---|---|
| Hauptkanal | Inhalt des Spielfilms einmalig übertragen wie normaler Rundfunk / normales Fernsehen (die Dateneinheiten 1a, 1b, ..., 1g aus Figur 4, wenn Übertragung gemäß des in Figur 4 dargestellten Verfahrens) |
| Subkanal I | Ergänzende Informationen für Einstiegspunkte alle 10 Minuten |
| Subkanal II | Ergänzende Informationen für Einstiegspunkte jede Minute |

### e) Unterschiedliche Qualität des Videos ("Layered Coding")

Schließlich ist eine Technik bekannt, die den Inhalt eines Multimediadatenstroms auf verschiedene Unterströme aufteilt: ein Basisdatenstrom liefert die Grundlage für die Betrachtung, ergänzende Datenströme liefern zusätzliche Qualität. Derartige Verfahren werden als "Layered Coding" bezeichnet und sind in verschiedenen Formen bekannt, insbesondere aus der Videodatenkompression. Hier können z.B. unterschiedliche (zeitliche und räumliche) Auflösungen eines Videofilms angeboten werden, etwa Basiskanal 15 fps (Frames per Second), 352x288, erster Zusatzkanal 30fps bei einer Auflösung von 352x288 Bildpunkten, zweiter Zusatzkanal 30fps bei einer Auflösung von 704x576 Bildpunkten usw.
Sie lassen sich ergänzend zu der Erfindung einsetzen und in beliebiger Kombination mit den oben genannten Aufteilungen in Subkanäle verwenden.

Im folgenden Beispiel wird im Hauptkanal nur ein Mono-Audio-Signal übertragen und ein Schwarz-weiß-Bild, Subkanal I liefert Stereoton und Farbe, Subkanal 2 HDTV-Qualität und Surround Sound. Eine solche Anwendung kann z.B. bei Pay-TV-Programmen sinnvoll sein, um unterschiedliche qualitative Abstufungen eines Film anzubieten.

| **Kanal** | **Dateneinheiten (Slots)** |
|---|---|
| Hauptkanal | Schwarzweiß-Bild, Mono-Audio |
| Subkanal I | Farbbild, Stereoton |
| Subkanal II | HDTV-Qualität, Surround Sound |

Es sei noch angemerkt, daß sich alle obigen Szenarien prinzipiell auch ohne Unterteilung in verschiedene Kanäle und Subkanäle realisieren lassen, indem die übertragenen Dateneinheiten entsprechend ihres jeweiligen Inhalts gekennzeichnet werden und die Empfänger dann nur die vom Verbraucher gewünschten Inhalte auswerten bzw. diejenigen, die sie auswerten können. Das Konzept der Kanäle bringt hier jedoch zusätzlich eine höhere Effizienz und gestattet die eingangs motivierte Heterogenität der Empfänger bezüglich ihrer Empfangsbandbreite.

### Fehlertolerante Übertragung

In paketvermittelten Netzen treten potentiell Paketverluste auf. Diese sind primär abhängig von der Dimensionierung des Netzes (Bandbreite der Verbindungen) und der Leistungsfähigkeit der eingesetzten Router. Während heute im Internet Paketverlustraten von 10% - 20% oder mehr auftreten, was die Übertragung von qualitativ hochwertigen Medienströmen quasi nicht realistisch erscheinen läßt, bieten in sich geschlossene und wohladministrierte Netze (wie etwa Satellitenverbindungen, Kabelnetze, Intranetze usw.) eine Umgebung mit nahezu verlustfreier Datenübertragung.

Auch hier kann jedoch der gelegentliche Verlust einer oder mehrerer Dateneinheiten nicht vollständig ausgeschlossen werden. Daher sind Mechanismen vorzusehen, die bei ihrer eigentlichen Übertragung verlorene Dateneinheiten bei dem/den Empfänger(n) rechtzeitig wiederherstellen, bevor sie wiedergegeben werden müssen.

Insgesamt lassen sich zwei Verfahren unterscheiden, die beide mit der Erfindung kombiniert werden können:
Falls ein Rückkanal zur Verfügung steht, können die Empfänger fehlende Dateneinheiten nochmals vom Sender anfordern, der diese dann wiederholt sendet. Um das Fehlen von Dateneinheiten festzustellen, sind die Dateneinheiten z.B. gemäß ihrer Übertragungsreihenfolge im Sendeplan zu numerieren oder anderweitig so zu kennzeichnen, daß ein Empfänger potentiell unabhängig von dem zu einem Zeitpunkt vom Sender genutzten Sendeplan in der Lage ist,
   - das Fehlen einer Dateneinheit zu erkennen (auch wenn diese erst in ferner Zukunft wiedergegeben werden soll),
   - ggf. zu ermitteln, ob die fehlende Dateneinheit nicht ohnehin vor dem Wiedergabezeitpunkt noch mindestens einmal vom Sender übertragen wird (so daß es keiner weiteren Aktion seitens des Empfängers bedarf) und,
   - falls erforderlich, das wiederholte Senden der fehlenden Dateneinheit beim Sender anzufordern.
Hier ist anzumerken, daß bei dieser Variante der Fehlerbehebung Sende-, Empfangs- und Wiedergabezeitpunkt einer Dateneinheit auseinanderfallen. Insbesondere kann eine zusätzliche (künstliche) Verzögerung zwischen Empfang und Wiedergabe eingefügt werden, um sicherzustellen, daß auch Dateneinheiten, deren Übertragung zeitnah an ihrem (ohne diese zusätzliche Verzögerung geltenden) Wiedergabezeitpunkt erfolgt ist, auch dann noch rechtzeitig für die Wiedergabe zur Verfügung stehen, wenn ihre Übertragung wiederholt werden muß.

Unabhängig davon, ob ein Rückkanal zur Verfügung steht oder nicht, können die übertragenen Dateneinheiten um redundante Zusatzinformationen angereichert werden. Wird dann bei der Übertragung eine Dateneinheit verloren, läßt sie sich mit einer vom Verfahren und/oder der genutzten Menge an Redundanzinformationen abhängigen Wahrscheinlichkeit aus den restlichen Dateneinheiten und/oder den Redundanzinformationen rekonstruieren. Derartige Verfahren bezeichnet man als Vorwärts-Fehlerkorrektur (Forward Error Correction, FEC). Im einfachsten Fall wird jede Dateneinheit mehrfach gesendet. Komplexere Verfahren senden für k Datenheiten (n-k) Redundanzeinheiten, die so generiert werden, daß aus n übertragenen Informationseinheiten k verloren gehen können und der Inhalt sich trotzdem vollständig rekonstruieren läßt. Verschiedene weitere Verfahren und Kombinationen unterschiedlicher Verfahren sind ebenfalls denkbar.

Hier ist ebenfalls anzumerken, daß Empfangs- und Wiedergabezeitpunkt auseinanderfallen können, falls beim Empfänger ggf. noch auf das Eintreffen der (potentiell später gesendeten) Redundanzeinheiten gewartet werden muß, bevor der Medieninhalt wiedergegeben werden kann.

Auch dies kann ggf. unter Nutzung von Kanälen und Subkanälen geschehen: so können etwa die Sendewiederholungen auf einem eigenen Subkanal übertragen werden; ebenso lassen sich unterschiedliche (sich vorzugsweise ergänzende) Mengen von FEC-Daten auf verschiedenen Subkanälen senden.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Übertragen von Dateneinheiten eines Datenstroms, insbesondere eines Multimediadatenstroms, von mindestens einer Sendeeinrichtung an mindestens eine Empfangseinrichtung Eⱼ (j ≥ 1), wobei :
- mit Hilfe mindestens einer Sendeeinrichtung n Datenmengen (n ≥ 2) gesendet werden;
- das Senden einer ersten Datenmenge M₁ der n Datenmengen zu einem Zeitpunkt t₁ beginnt,
- die erste Datenmenge M₁ alle Dateneinheiten des Datenstroms umfaßt,
- das Senden wenigstens einer weiteren Datenmenge Mₖ (2 ≤ k ≤ n) der n Datenmengen zu einem Zeitpunkt tₖ (2 ≤ k ≤ n) beginnt;
- die wenigstens eine weitere Datenmenge Mₖ mindestens einen Teil der Dateneinheiten des Datenstroms umfaßt;
- die n Datenmengen gesendet werden, so daß in der wenigstens einen Empfangseinrichtung Eⱼ eine Wiedergabe der Dateneinheiten des Datenstroms als vorgegebene zeitliche Abfolge von Informationen, insbesondere Bild- und/ oder Toninformationen, zu einem Anfangszeitpunkt tₖ^{^} = tₖ + ϑ (ϑ > 0) begonnen und zu einem Endzeitpunkt tₖ^{E} = tₖ^{^} + Δt beendet werden kann, wobei ϑ eine für die Übertragung einzeiner Dateneinheiten des Datenstroms von der mindestens einen Sendeeinrichtung an die mindestens eine Empfangseinrichtung Eⱼ und/oder eine Verarbeitung einzelner Dateneinheiten des Datenstroms charakteristische Zeitdauer und Δt eine für die Wiedergabe aller Dateneinheiten des Datenstroms als die vorgegebene zeitliche Abfolge von Informationen charakteristische Zeitdauer sind; und
- die wenigstens eine weitere Datenmenge Mₖ (2 ≤ k ≤ n) von ausgewählten Dateneinheiten des Datenstroms gebildet wird, für die ein früheres Senden in einem Zeitintervall zwischen einem Zeitpunkt tₖ₋₁ und dem Zeitpunkt tₖ (2 ≤ k ≤ n) von der mindestens einen Sendeeinrichtung zumindest einmal begonnen wird, wobei für wenigstens zwei von aufeinanderfolgenden Zeitpunkten tₖ und tₖ₊₁ (1 ≤ k ≤ n) ein zeitlicher Abstand (tₖ₊₁ - tₖ) kleiner als Δt ist;
**dadurch gekennzeichnet, daß** an die mindestens eine Empfangseinrichtung Eⱼ mindestens ein von dem Datenstrom verschiedener, weiterer Datenstrom in Form von weiteren Dateneinheiten von der mindestens einen Sendeeinrichtung und / oder von wenigstens einer anderen Sendeeinrichtung übermittelt wird und daß die weiteren Dateneinheiten des weiteren Datenstroms empfängerseitig verwendet werden, um für die Dateneinheiten des Datenstroms eine erste Wiedmabeform und eine von der ersten verschiedene zweiten Wiedergabeform für die Wiedergabe der Dateneinheiten des Datenstroms mit der mindestens einen Empfangseinrichtung Eⱼ zu bilden.

2. Verfahren nach Anspruch 1, **dadurch gekennzeichnet, daß** eine Eingabe eines Nutzers der mindestens einen Empfangseinrichtung Eⱼ zur Festlegung des Zeitpunkts t₁ und/oder des Zeitpunkts tₖ (2 ≤ k ≤ n) elektronisch erfaßt wird, wobei die Eingabe über einen zwischen der mindestens einen Sendeeinrichtung und der mindestens einen Empfangseinrichtung Eⱼ ausgebildeten Rück-Datenkanal an die mindestens eine Sendeeinrichtung übertragen wird.

3. Verfahren nach Anspruch 1, **dadurch gekennzeichnet, daß** der Zeitpunkt t₁ und/oder die Zeitpunkte tₖ (2 ≤ k ≤ n) sendeseitig vorgegeben werden.

4. Verfahren nach einem der vorangehenden Ansprüche, **dadurch gekennzeichnet, daß** zwischen den Zeitpunkten tₖ₋₁ und tₖ (2 ≤ k ≤ n) jeweils ein im wesentlichen gleicher zeitlicher Abstand ausgebildet ist.

5. Verfahren nach einem der vorangehenden Ansprüche, **dadurch gekennzeichnet, daß** der Datenstrom x Dateneinheiten Dₓ (x = 1, 2, ...) umfaßt, das Übertragen zwischen der mindestens einen Sendeeinrichtung und der mindestens einen Empfangseinrichtung Eⱼ (j ≥ 1) über eine vorgegebene Zeitdauer ausgeführt wird, die in Zeitintervalle Δt_{y} (y = 1, 2, ...) geteilt wird, wobei eine m-te Dateneinheit Dₘ (1 < m ≤ x) innerhalb jedes m-ten Zeitintervalls Δtₘ (1 < m ≤ y) übertragen wird.

6. Verfahren nach einem der Ansprüche 1 bis 4, **dadurch gekennzeichnet, daß** der Datenstrom x Dateneinheiten Dₓ (x = 1, 2, ...) umfaßt, das Übertragen zwischen der mindestens einen Sendeeinrichtung und der mindestens einen Empfangseinrichtung Eⱼ (j ≥ 1) über eine vorgegebene Zeitdauer ausgeführt wird, die in Zeitintervalle Δt_{y} (y = 1, 2, ...) geteilt wird, wobei das Senden einer m-ten Dateneinheit Dₘ (1 ≤ m ≤ x) innerhalb jedes (1 + p · m)-ten Zeitintervalls Δt₁₊ₚₘ (p ≥ 0) begonnen wird und sich über m Zeitintervalle Δt₁ +...+ Δtₘ (1 ≤ m ≤ y) erstreckt.

7. Verfahren nach einem der Ansprüche 1 bis 4, **dadurch gekennzeichnet, daß** der Datenstrom x Dateneinheiten Dₓ (x = 1, 2, ...) umfaßt, das Übertragen zwischen der mindestens einen Sendeeinrichtung und der mindestens einen Empfangseinrichtung Eⱼ (j ≥ 1) über eine vorgegebene Zeitdauer ausgeführt wird, die in Zeitintervalle Δt_{y} (y = 1, 2, ...) geteilt wird, wobei alle m-ten Dateneinheiten Dₘ (1 < m ≤ x) in jedem m-ten Zeitintervall Δtₘ gesendeten wird, wenn m = 2^{p} (p = 0, 1, 2, 3, ...), und alle h-ten Dateneinheiten Dₕ (1 < h < x), für welche 2^{z} < h < 2^{z+1} (z ≥ 0) gilt, genau einmal zwischen dem 2^{z}-ten Zeitintervall und dem 2^{z+1}-ten Zeitintervall.

8. Verfahren nach einem der Ansprüche 5 bis 7, **dadurch gekennzeichnet, daß** die Dateneinheiten Dₓ des Datenstroms von einem Gesamtdatenstrom von Dateneinheiten D_{x*} (x* = v + x; v ≥ 1) umfaßt sind, wobei v eine Anzahl von Dateneinheiten D_{x*} des Gesamtdatenstroms ist, die vor dem Zeitpunkt t₁ an die mindestens eine Empfangseinrichtung Eⱼ übermittelt werden, so daß beim Senden der m-ten Dateneinheit Dₘ gilt: v < m ≤ x*.

9. Verfahren nach einem der vorangehenden Ansprüche, **dadurch gekennzeichnet, daß** eine von der mindestens einen Empfangseinrichtung Eⱼ empfangene Dateneinheit D^{E}ₓ (x = 1, 2, ...) des Datenstroms zu einem Wiedergabezeitpunkt t^{W}ₓ (x = 1, 2, ...) innerhalb der vorgegebenen zeitlichen Abfolge von Informationen mit Hilfe von Wiedergabemitteln wiedergegeben wird, wobei eine m-te Dateneinheit Dₘ des Datenstroms so gesendet wird, daß eine die gesendete m-te Dateneinheit Dₘ umfassende, m-te empfangene Dateneinheit D^{E}ₘ (1 < m ≤ x) in zeitlicher Nähe zu einem Wiedergabezeitpunkt t^{W}ₘ von der mindestens einen Empfängereinrichtung Eⱼ empfangen wird.

10. Verfahren nach einem der vorangehenden Ansprüche, **dadurch gekennzeichnet, daß** eine von der mindestens einen Empfangseinrichtung Eⱼ empfangene Dateneinheit D^{E}ₓ (x = 1, 2, ...) des Datenstroms zu einem Wiedergabezeitpunkt t^{W}ₓ (x = 1, 2, ...) innerhalb der vorgegebenen zeitlichen Abfolge von Informationen mit Hilfe von Wiedergabemitteln wiedergegeben wird, wobei eine zu einem Empfangszeitpunkt t_{Empfang} m-te empfangene Dateneinheit D^{E}ₘ (1 < m ≤ x)
a) an die Wiedergabemittel übergegeben wird, wenn t_{Empfang} = t^{W}ₘ - ε (e > 0), wobei ε eine charakteristische Zeit für die Übergabe der m-ten empfangenen Dateneinheit D^{E}ₘ an die Wiedergabemittel und/oder eine Umwandlung der m-ten empfangenen Dateneinheit D^{E}ₘ zur Wiedergabe ist; oder
b) in Speichermitteln der wenigstens einen Empfangseinrichtung Eⱼ gespeichert wird, wenn t_{Empfang} < t^{W}ₘ - ε und die m-te empfangene Dateneinheit D^{E}ₘ noch nicht in den Speichermitteln gespeichert ist; oder
c) verworfen wird, wenn t_{Empfang} > t^{W}ₘ - ε oder die m-te empfangene Dateneinheit D^{E}ₘ in den Speichermitteln bereits gespeichert ist.

11. Verfahren nach einem der Ansprüche 1 bis 9, **dadurch gekennzeichnet, daß** eine von der mindestens einen Empfangseinrichtung Eⱼ empfangene Dateneinheit D^{E}ₓ (x = 1, 2, ...) des Datenstroms zu einem Wiedergabezeitpunkt t^{W}ₓ (x = 1, 2, ...) innerhalb der vorgegebenen zeitlichen Abfolge von Informationen mit Hilfe von Wiedergabemitteln wiedergegeben wird, wobei eine zu einem Empfangszeitpunkt t_{Empfang} m-te empfangene Dateneinheit D^{E}ₘ (1 < m ≤ x)
a) an die Wiedergabemittel übergegeben wird, wenn t_{Empfang} = t^{W}ₘ - ε (ε > 0), wobei E eine charakteristische Zeit für die Übergabe der m-ten empfangenen Dateneinheit D^{E}ₘ an die Wiedergabemittel und/oder eine Umwandlung der m-ten empfangenen Dateneinheit D^{E}ₘ zur Wiedergabe ist; oder
b) in Speichermitteln der wenigstens einen Empfangseinrichtung Eⱼ gespeichert wird, wenn [t_{Empfang} < (t^{W}ₘ - ε) < (t_{Empfang} + Δt_{Mem})] und die m-te empfangene Dateneinheit D^{E}ₘ noch nicht in den Speichermitteln gespeichert ist, wobei Δt_{Mem} eine für die Wiedergabe eines Teils der empfangenen Dateneinheiten D^{E}ₓ charakterisierende Zeitdauer ist, und die Speicherkapazität der Speichermittel auf den Teil der empfangenen Dateneinheiten begrenzt ist; oder
c) verworfen wird, wenn t_{Empfang} > t^{W}ₘ - ε oder die m-te empfangene Dateneinheit D^{E}ₘ in den Speichermitteln bereits gespeichert ist.

12. Verfahren nach einem der vorangehenden Ansprüche, **dadurch gekennzeichnet, daß** der Datenstrom wenigstens teilweise als verschlüsselter Datenstrom übertragen wird.

13. Verfahren nach Anspruch 12, **dadurch gekennzeichnet, daß** die erste Datenmenge M₁ und die wenigstens eine weitere Datenmenge Mₖ (2 ≤ k ≤ n) der n Datenmengen so übertragen werden, daß bei der Wiedergabe der Dateneinheiten in der mindestens einen Empfangseinrichtung Eⱼ für einen vorgegebenen Anfangszeitraum nach dem Anfangszeitpunkt tₖ^{A} = tₖ + ϑ (ϑ > 0) Dateneinheiten wiedergegeben werden, die unverschlüsselt übertragen werden.

14. Sendevorrichtung zum Übertragen von Dateneinheiten eines Datenstroms, insbesondere eines Multimediadatenstroms, und mindestens eines von dem Datenstrom verschiedenen, weiteren Datenstroms in Form von weiteren Dateneinheiten, die in die Wiedergabe der Dateneinheiten des Datenstroms empfängerseitig verwendet werden, um für die eine erste Wiedergabeform und eine von der ersten verschiedene zweite Wiedergabeform zu bilden, an mindestens eine Empfangseinrichtung Eⱼ (j ≥ 1) mit Sendemitteln zum Senden der Dateneinheiten und der weiteren Dateneinheiten und Steuermitteln zum Steuern der Sendemittel, derart, daß die Dateneinheiten des Datenstroms und die weiteren Datenemheiten des mindesteins einen weiteren Datenstroms nach einem Verfahren der Ansprüche 1 bis 13 übertragen werden.

15. Vorrichtung nach Anspruch 14, **dadurch gekennzeichnet, daß** die Sendemittel wenigstens zwei Sender zum Senden der Dateneinheiten und der weiteren Dateneinheiten umfassen, wobei die zwei Sender mit Hilfe der Steuereinrichtung so steuerbar sind, daß ein Teil des Datenstroms und/oder des mindestens einen weiteren Datenstroms über einen der wenigstens zwei Sender und ein anderer Teil des Datenstroms und/oder des mindestens einen weiteren Datenstroms über einen anderen der wenigstens zwei Sender gesendet werden kann.

16. Vorrichtung nach Anspruch 15, **dadurch gekennzeichnet, daß** der eine Teil des Datenstroms von den x Dateneinheiten Dₓ (x = 2, 3, ...) mindestens eine Dateneinheit D_{b} (b ≤ x) und der andere Teil des Datenstroms von den x Dateneinheiten Dₓ Dateneinheiten D₁, ..., D_{b-1}, D_{b+1}, ..., Dₓ umfaßt.

## Claims

1. Method for transmitting data units of a data stream, especially a multimedia data stream, from at least one transmitting facility to at least one receiving facility Eⱼ (j ≥ 1), in which method:
- n data sets (n ≥ 2) are sent with the aid of the at least one transmitting facility,
- the sending of a first data set M₁ of the n data sets begins at a time t₁,
- the first data set M₁ comprises all data units of the data stream,
- the sending of at least one further data set Mₖ (2 ≤ k ≤ n) of the n data sets begins at a time tₖ (2 ≤ k ≤ n),
- the at least one further data set Mₖ comprises at least one part of the data units of the data stream,
- the n data sets are sent in such a manner that in the at least one receiving facility Eⱼ, a reproduction of the data units of the data stream as predetermined time sequence of information, especially picture and/or sound information, can be begun at a starting time tₖ^{^}=tₖ + θ (θ > 0) and ended at an ending time tₖ^{E} = tₖ^{A} + Δt, where θ is a period characteristic of the transmission of individual data units of the data stream from the at least one transmitting facility to the at least one receiving facility Eⱼ and/or processing of individual data units of the data stream and Δt is a period characteristic of the reproduction of all data units of the data stream as the predetermined time sequence of information, and
- the at least one further data set Mₖ (2 ≤ k ≤ n) is formed from selected data units of the data stream for which an earlier transmission is begun at least once by the at least one transmitting facility in a time interval between a time tₖ₋₁ and the time tₖ (2 ≤ k ≤ n), a time interval (tₖ₋₁-tₖ) being smaller than Δt for at least two of successive times tₖ and tₖ₊₁ (1 ≤ k ≤ n),
**characterised in that** at least one further data stream, different from the data stream, in the form of further data units is transmitted to the at least one receiving facility Eⱼ by the at least one transmitting facility and/or by at least one other transmitting facility, and **in that** the further data units of the further data stream are used on the receiving side to form, for the data units of the data stream, a first reproduction form and a second reproduction form different from the first, for the reproduction of the data units of the data stream with the at least one receiving facility Eⱼ.

2. Method according to Claim 1, **characterized in that** an input of a user of the at least one receiving facility Eⱼ for establishing the time t₁ and/or the time tₖ (2 ≤ k ≤ n) is electronically detected, the input being transmitted to the at least one transmitting facility via a return data channel formed between the at least one transmitting facility and the at least one receiving facility Eⱼ.

3. Method according to Claim 1, **characterized in that** the time t₁ and/or the times tₖ (2 ≤ k ≤ n) are predetermined at the transmitting end.

4. Method according to one of the preceding claims, **characterized in that** an essentially equal time interval is formed in each case between the times tₖ₋₁ and tₖ (2 ≤ k ≤ n).

5. Method according to one of the preceding claims, **characterized in that** the data stream comprises x data units Dₓ (x = 1,2, ...), the transmitting between the at least one transmitting facility and the at least one receiving facility Eⱼ (j ≥ 1) is performed over a predetermined period which is divided into time intervals Δt_{y} (y = 1,2, ...), an mth data unit Dₘ (1 < m ≤ x) being transmitted within each mth time interval Δtₘ (1 < m ≤ y).

6. Method according to one of Claims 1 to 4, **characterized in that** the data stream comprises x data units Dₓ (x = 1,2, ...), the transmitting between the at least one transmitting facility and the at least one receiving facility Eⱼ (j ≥ 1) is performed over a predetermined period which is divided into time intervals Δt_{y} (y = 1,2, ...), the sending of an mth data unit Dₘ (1 ≤ m ≤ x) being begun within each (1 + p·m)-th time interval Δt₁₊ₚₘ (p ≥ 0) and extending over m time intervals Δt₁+...+Δtₘ (1 ≤ m ≤ y).

7. Method according to one of Claims 1 to 4, **characterized in that** the datastream comprises x data units Dₓ (x = 1,2, ...), the transmitting between the at least one transmitting facility and the at least one receiving facility Eⱼ (j ≥ 1) is performed over a predetermined period which is divided into time intervals Δt_{y} (y = 1,2, ...), all mth data units Dₘ (1 ≤ m ≤ x) being sent in each mth time interval Δtₘ if m = 2^{p} (p = 0, 1, 2, 3, ...) and all hth data units Dₕ (1 < h ≤ x), for which 2^{k} < h < 2^{z+1} (z ≥ 0), exactly once between the 2^{z}th time interval and the 2^{z+1}th time interval.

8. Method according to one of Claims 5 to 7, **characterized in that** the data units Dₓ of the data stream of a total data stream are comprised of data units D_{x*} (x* = v + x; v ≥ 1), where v is a number of data units D_{x*} of the total data stream which are conveyed to the at least one receiving facility Eⱼ before the time t₁ so that the following holds true when the mth data unit Dₘ is sent: v < m ≤ x*.

9. Method as claimed in one of the preceding claims, **characterized in that** a data unit D^{E}ₓ (x = 1,2, ...) of the data stream which is received by the at least one receiving facility Eⱼ is reproduced with the aid of replay means at a replay time t^{W}ₓ (x = 1,2, ...) within the predetermined time sequence of information items, an mth data unit Dₘ of the data stream being sent in such a manner that an mth received data unit D^{R}ₘ (1 < m ≤ x) comprising the transmitted mth data unit Dₘ is received by the at least one receiver facility Eⱼ closely in time to a replay time t^{W}ₘ.

10. Method according to one of the preceding claims, **characterized in that** a data unit D^{E}ₓ (x = 1,2, ...) of the data stream which is received by the at least one receiving facility Eⱼ is reproduced with the aid of replay means at a replay time t^{W}ₓ (x = 1,2, ...) within a predetermined time sequence of information items, an mth received data unit D^{E}ₘ (1 < m ≤ x) received at a receiving time t^{E} being
a) transferred to the replay means when t_{E} = t^{W}ₘ - ε (ε > 0), where ε is a characteristic time for transferring the mth received data unit D^{E}ₘ to the replay means and/or a conversion of the mth received data unit D^{E}ₘ for reproduction; or
b) stored in storage means of the at least one receiving facility Eⱼ if t_{E} < t^{W}ₘ - ε and the mth received data unit D^{E}ₘ is not yet stored in the storage means; or
c) discarded if t_{E} > t^{W}ₘ - ε or the mth received data unit D^{E}ₘ is already stored in the storage means.

11. Method according to one of Claims 1 to 9, **characterized in that** a data unit D^{E}ₓ (x = 1,2, ...) of the data stream which is received by the at least one receiving facility Eⱼ is reproduced with the aid of replay means at a replay time t^{W}ₓ (x = 1,2, ...) within a predetermined time sequence of information items, an mth received data unit D^{E}ₘ (1 < m ≤ x) received at a receiving time t^{E} being
a) transferred to the replay means when t_{E} = t^{W}ₘ - s (s > 0), where ε is a characteristic time for transferring the mth received data unit D^{E}ₘ to the replay means and/or a conversion of the mth received data unit D^{E}ₘ for reproduction; or
b) stored in storage means of the at least one receiving facility Eⱼ if [t_{E} < (t^{W}ₘ - s) < (t_{E} + Δ t_{Mem})] and the mth received data unit D^{E}ₘ is not yet stored in the storage means, where Δt_{Mem} is a characteristic period for the reproduction of a part of the received data units D^{E}ₓ and the storage capacity of the storage means is limited to the part of the received data units; or
c) discarded if t_{E} > t^{W}ₘ - ε or the mth received data unit D^{E}ₘ is already stored in the storage means.

12. Method according to one of the preceding claims, **characterized in that** a data stream is at least partially transmitted as encrypted data stream.

13. Method according to Claim 12, **characterized in that** the first data set M₁ and the at least one further data set Mₖ (2 ≤ k ≤ n) of the n data sets are transmitted in such a manner that during the reproduction of the data units in the at least one receiving facility Eⱼ, data units which are transmitted unencrypted are reproduced for a predetermined starting period after the starting time tₖ^{^} = tₖ + θ(θ > 0).

14. Transmitting device for transmitting data units of a data stream, in particular a multimedia data stream, and at least one further data stream different from the data stream, in the form of further data units which are used on the receiving side in the reproduction of the data units of the data stream to form a first reproduction form, and a second reproduction form different from the first, for the data units of the data stream, to at least one receiving device Eⱼ (j ≥ 1), comprising transmission means for transmitting the data units and the further data units, and control means for controlling the transmission means in such a way that the data units of the data stream and the further data units of the at least one further data stream are transmitted according to a method according to claims 1 to 13.

15. Device according to Claim 14, **characterized in that** the transmitting means comprise at least two transmitters for transmitting the data units, the two transmitters being controllable with the aid of the control device in such a manner that a part of the data stream and / or of the at least one further data stream can be sent via one of the at least two transmitters and another part of the data stream and / or of the at least one further data stream can be sent via another one of the at least two transmitters.

16. Device according to Claim 15, **characterized in that** the one part of the data stream comprises at least one data unit D_{b} (b ≤ x) of the x data units Dₓ (x =1 2,3, ...) and the other part of the data stream comprises data units D₁, ..., D_{b-1}, D_{b+1}, ..., Dₓ of the x data units Dₓ.

## Revendications

1. Procédé de transmission d'unités de données dans un flux de données, notamment dans un flux de données multimédia, d'au moins un dispositif émetteur vers au moins un dispositif récepteur Eⱼ (j≥1), où :
◆ à l'aide d'au moins un dispositif émetteur, n quantités de données (n ≥ 2) étant envoyées ;
◆ l'envoi d'une première quantité de données M₁ des n quantités de données commençant à un moment t₁,
◆ la première quantité de données M₁ comprenant toutes les unités de données du flux de données ;
◆ l'envoi d'au moins une quantité supplémentaire de données Mₖ (2 ≤ k ≤ n) de la n quantité de données commençant à un moment tₖ (2 ≤ k ≤ n) ;
◆ la au moins une quantité de données supplémentaires Mₖ comprenant au moins une partie des unités de données du flux de données ;
◆ les n quantités de données étant envoyées pour que dans ledit au moins un dispositif récepteur Ej, une reproduction des unités de données du flux de données puisse commencer à un moment de démarrage tₖ^{A} = tₖ + 3 (ϑ > 0) et être arrêté à un moment d'arrêt tₖ^{E} = tₖ^{A} + Δt, en tant que séquence temporaire prédéfinie d'informations, notamment d'informations vidéo ou audio, ϑ étant une période caractéristique pour la transmission d'unités individuelles de données du flux de données dudit au moins un dispositif émetteur vers ledit au moins un dispositif récepteur Eⱼ, et/ou pour un traitement d'unités individuelles de données du flux de données et Δt étant une période caractéristique pour la reproduction de toutes les unités de données du flux de données en tant que séquence temporelle prédéfinie d'informations ; et
◆ ledit au moins une quantité supplémentaire de données Mₖ (2 ≤ k ≤ n) étant formée par des unités de données sélectionnées dans le flux de données, pour lesquelles une émission prématurée dans un intervalle temporel compris entre un moment tₖ₋₁ et le moment tₖ (2 ≤ k ≤ n) est démarrée au moins une fois par ledit au moins un dispositif émetteur, pour au moins deux moments consécutifs tₖ et tₖ₊₁ (1 ≤ k ≤ n) un écart temporel (tₖ₊₁ - tₖ) étant inférieur à Δt;
**caractérisé en ce qu'**au moins un flux de données supplémentaire, différent du flux de données est transmis audit au moins un dispositif récepteur Eⱼ sous la forme d'unités de données supplémentaires par ledit au moins un dispositif émetteur et/ou par au moins un dispositif émetteur supplémentaire et **en ce que** les unités de données supplémentaires du flux de données supplémentaire sont utilisées côté récepteur pour former pour les unités de données du flux de données une première forme de reproduction et une seconde forme de reproduction différente de la première pour la reproduction des unités de données du flux de données avec ledit au moins un dispositif récepteur Eⱼ.

2. Procédé selon la revendication 1, **caractérisé en ce qu'**un opérateur dudit au moins un dispositif récepteur Eⱼ procède à une saisie par informatique pour déterminer le moment t₁ et/ou le moment tₖ (2 ≤ k ≤ n), la saisie étant transmise à audit au moins un dispositif émetteur par l'intermédiaire d'un canal de données de retour conçu entre ledit au moins un dispositif émetteur et ledit au moins un dispositif récepteur Eⱼ.

3. Procédé selon la revendication 1, **caractérisé en ce que** le moment t₁ et ou les moments tₖ (2 ≤ k ≤ n) sont prédéfinis côté émetteur.

4. Procédé selon l'une quelconque des revendications précédentes, **caractérisé en ce qu'**un espace temporel sensiblement identique est respectivement conçu entre les moments tₖ₋₁ et tₖ (2 ≤ k ≤ n).

5. Procédé selon l'une quelconque des revendications précédentes, **caractérisé en ce que** le flux de données comprend x unités de données Dₓ (x = 1, 2 ...), **en ce que** la transmission entre ledit au moins un dispositif émetteur et ledit au moins un dispositif récepteur Eⱼ (j ≥ 1) est réalisée sur une période prédéfinie, qui est divisée en intervalles temporels Δt_{y} (y = 1, 2 ...), une m^{ème} unité de données Dₘ (1 < m ≤ x) étant transmise au sein de chaque m^{ème} intervalle de temps Δtₘ (1<m≤y).

6. Procédé selon l'une quelconque des revendications 1 à 4, **caractérisé en ce que** le flux de données comprend x unités de données Dₓ (x = 1, 2 ...), **en ce que** la transmission entre ledit au moins un dispositif émetteur et ledit au moins un dispositif récepteur Eⱼ (j ≥ 1) est réalisée sur une période prédéfinie, qui est divisée en intervalles temporels Δt_{y} (y = 1, 2 ...), l'envoi d'une m^{ème} unité de données Dₘ (1 ≤ m ≤ x) démarrant au sein de chaque (1 + p · m)^{ème} intervalle temporel Δt₁₊ₚₘ (p ≥ 0) et s'étendant sur m intervalles temporels Δt₁ +...+ Δtₘ (1 ≤ m ≤ y).

7. Procédé selon l'une quelconque des revendications 1 à 4, **caractérisé en ce que** le flux de données comprend x unités de données Dₓ (x = 1, 2 ...), **en ce que** la transmission entre ledit au moins un dispositif émetteur et ledit au moins un dispositif récepteur Eⱼ (j ≥ 1) est réalisée sur une période prédéfinie, qui est divisée en intervalles temporels Δt_{y} (y = 1, 2 ...), un envoi ayant lieu toutes les m^{ème} unités de données Dₘ (1 < m ≤ x) dans chaque m^{ême} intervalle temporel Δtₘ, si m = 2^{p} (p = 0, 1, 2, 3, ...) et toutes les h^{ème} unités de données Dₕ (1 < h ≤ x) pour lesquelles 2^{z} < h < 2^{z+1} (z ≥ 0) s'applique, exactement une fois entre le 2^{zème} intervalle temporel et le 2^{z+i} ème intervalle temporel.

8. Procédé selon l'une quelconque des revendications 5 à 7, **caractérisé en ce que** les unités de données Dₓ du flux de données sont compris dans un flux de données global d'unités de données D_{x*} (x* = v + x ; v ≥ 1), v étant un nombre d'unités de données D_{x*} du flux de données global, qui sont transmises à au moins le dispositif récepteur Eⱼ avant le moment t₁ pour que lors de l'envoi de la m^{ème} unité de données Dₘ, on applique : v < m ≤ x*.

9. Procédé selon l'une quelconque des revendications précédentes, **caractérisé en ce qu'**une unité de données D^{E}ₓ (x = 1, 2, ...) du flux de données réceptionnée par ledit au moins un dispositif récepteur Eⱼ est reproduite à un moment de reproduction t^{W}ₓ (x = 1, 2, ...) à l'intérieur de la séquence temporelle prédéfinie d'informations, à l'aide de moyens de reproduction, une m^{ème} unité de données Dₘ du flux de données étant envoyée de façon telle qu'une m^{ème} unité de données D^{E}ₘ (1 < m ≤ x) réceptionnée comprenant la m^{ème} unité de données envoyée est réceptionnée à un moment proche d'un moment de reproduction t^{w}ₘ par ledit au moins un dispositif récepteur Eⱼ.

10. Procédé selon l'une quelconque des revendications précédentes, **caractérisé en ce qu'**une unité de données D^{E}ₓ (x = 1, 2, ...) du flux de données, qui est réceptionnée par ledit au moins un dispositif récepteur Eⱼ est reproduite à l'aide de moyens de reproduction, à un moment de reproduction t^{W}ₓ (x = 1, 2, ...), au sein de la séquence temporelle prédéfinie, une m^{ème} unité de données D^{E}ₘ (1 < m ≤ x) réceptionnée à un moment de réception t_{réception} :
a) étant transmise aux moyens de reproduction, si t_{réception} = t^{W}ₘ - E (ε > 0), E étant un temps caractéristique pour la transmission de la m^{ème} unité de données réceptionnée D^{E}ₘ aux moyens de reproduction et/ou pour une transformation de la m^{ème} unité de données réceptionnée D^{E}ₘ pour la reproduction ; ou
b) étant sauvegardée dans des mémoires dudit au moins un dispositif récepteur Eⱼ, si t_{réception} > t^{W}ₘ - ε et si la m^{ème} unité de données réceptionnée D^{E}ₘ n'est pas encore sauvegardée dans les mémoires ; ou
c) étant rejetée, si t_{réception} > t^{W}ₘ - ε ou si la m^{ème} unité de données réceptionnée D^{E}ₘ est d'ores et déjà sauvegardée dans les mémoires.

11. Procédé selon l'une quelconque des revendications 1 à 9, **caractérisé en ce qu'**une unité de données D^{E}ₓ (x = 1, 2, ...) du flux de données, réceptionnée par ledit au moins un dispositif récepteur Eⱼ est reproduite à un moment de reproduction t^{W}ₓ (x = 1, 2, ...), au sein de la séquence temporelle prédéfinie d'informations, à l'aide de moyens de reproduction, une m^{ème} unité de données réceptionnée D^{E}ₘ 1 < m ≤ x) à un moment de réception t_{réception} :
a) étant transmise aux moyens de reproduction, si t_{réception} = t^{W}ₘ - ε (ε > 0), ε étant un temps caractéristique pour la transmission de la m^{ème} unité de données réceptionnée D^{E}ₘ aux moyens de reproduction et/ou pour une transformation de la m^{ème} unité de données réceptionnée D^{E}ₘ pour la reproduction ; ou
b) étant sauvegardée dans des mémoires dudit au moins un dispositif récepteur Eⱼ, si [t_{réception} < (t^{W}ₘ - s ) < (t_{réception} < Δtₘₑₘ)] et si la m^{ème} unité de données réceptionnée D^{E}ₘ n'est pas encore sauvegardée dans les mémoires, Δtₘₑₘ étant une période caractéristique pour la reproduction d'une partie des unités de données D^{E}ₓ réceptionnées et la capacité de mémoire des mémoires étant limitée à la partie des unités de données réceptionnées ; ou
c) étant rejetée, si t_{réception} > t^{W}ₘ - ε ou si la m^{ème} unité de données réceptionnée D^{E}ₘ est d'ores et déjà sauvegardée dans les mémoires.

12. Procédé selon l'une quelconque des revendications précédentes, **caractérisé en ce que** le flux de données est transmis au moins partiellement en tant que flux de données crypté.

13. Procédé selon la revendication 12, **caractérisé en ce que** la première quantité de données M₁ et ladite au moins une quantité de données supplémentaires Mₖ (2 ≤ k ≤ n) des n quantités de données sont transmises de façon telle, que lors de la reproduction des unités de données dans ledit au moins un dispositif récepteur Eⱼ des unités de données qui sont transmises de façon non cryptée sont reproduites pour une période de démarrage prédéfinie après le moment de démarrage tₖ^{A} = tₖ + ϑ (ϑ > 0).

14. Dispositif émetteur pour la transmission d'unités de données d'un flux de données, notamment d'un flux de données multimédia, et d'au moins un flux de données supplémentaire, différent du flux de données, sous la forme d'unités de données supplémentaires, qui dans la reproduction des unités de données du flux de données à au moins un dispositif récepteur Eⱼ (j ≥ 1) avec des moyens émetteurs pour émettre les unités de données et les unités de données supplémentaires et à des moyens de commande pour le pilotage des moyens de commande sont utilisées côté récepteur, pour former pour les unités de données du flux de données une première forme de reproduction et une deuxième forme de reproduction différente de la première, de façon à ce que les unités de données du flux de données et les unités de données supplémentaires dudit au moins un flux de données supplémentaires soient transmises selon un procédé selon les revendications 1 à 13.

15. Dispositif selon la revendication 14, **caractérisé en ce que** les moyens émetteurs comportent au moins deux émetteurs pour l'envoi des unités de données et des unités de données supplémentaires, les deux émetteurs étant pilotables à l'aide du dispositif de commande de façon telle, qu'une partie du flux de données et/ou dudit au moins un flux de données supplémentaire puisse être envoyée par l'intermédiaire de l'un d'au moins les deux émetteurs et qu'une autre partie du flux de données et/ou d'au moins le flux de données supplémentaire puisse être envoyée par l'intermédiaire d'un autre émetteur d'au moins les deux émetteurs.

16. Dispositif selon la revendication 15, **caractérisé en ce que** l'une des parties du flux de données des x unités de données Dₓ (x = 2, 3 ...) comprend au moins une unité de données D_{b} (b ≤ x) et l'autre partie du flux de données comprend des unités de données D₁, D_{b-1}, D_{b+1}, ... Dₓ des x unités de données Dₓ.
